# EUROPÄISCHE PATENTSCHRIFT

(11) **EP 2 908 100 B1**
(45) Veröffentlichungstag und Bekanntmachung des Hinweises auf die Patenterteilung: **17.01.2018**
(21) Anmeldenummer: 14155582.1
(22) Anmeldetag: 18.02.2014
(51) Int. Cl.: G01D 5/347

(54) **System zur Bestimmung von Relativpositionen**
System for determining relative positions
Système de détermination de positions relatives

(43) Veröffentlichungstag der Anmeldung: 19.08.2015
(73) Patentinhaber: Hexagon Technology Center GmbH, 9435 Heerbrugg (CH)
(72) Erfinder: Vokinger, Urs, CH-9434 Au (CH); Lippuner, Heinz, CH-9445 Rebstein (CH); Amann, Werner, AT-6800 Feldkirch (AT); Siercks, Knut, CH-9402 Mörschwil (CH)
(74) Vertreter: Kaminski Harmann

(56) Entgegenhaltungen:
- EP-A1- 1 195 880
- EP-A2- 0 416 391
- EP-A2- 1 882 989
- DE-A1- 3 818 044
- FR-A1- 2 974 897
- SCHOTT: "Zerodur Zero expansion glass ceramic", , Juli 2011 (2011-07), XP002726543, Gefunden im Internet: URL:http://www.schott.com/advanced_optics/ english/download/schott_zerodur_katalog_ju ly_2011_en.pdf [gefunden am 2014-07-02]

## Beschreibung

Die Erfindung betrifft ein System zur Bestimmung von Relativpositionen mit einem Geber und einer Sensoreinheit mit wenigstens zwei zueinander beabstandeten Sensoren nach Anspruch 1 und ein Verfahren zum hochpräzisen Bestimmen eines Sensorabstands nach Anspruch 16 und ein ebensolches Computerprogrammprodukt.

Systeme mit einer elektronischen Sensoreinheit zur Bestimmung einer Relativposition anhand von Geberelementen eines Gebers finden sich in vielen Bereichen. Derartige Systeme dienen beispielsweise zur Bestimmung einer Relativposition zwischen zwei Gliedern, wovon i.d.R. ein Glied fest positioniert und das andere relativ dazu zumindest entlang einer Achse bewegbar ist. Eine derartige Relativposition kann z.B. die Stellung einer Maschinenkomponente auf einer linearen Achse bzw. Rotationsachse sein. Entsprechend finden sich derartige Systeme in Geräten wie Koordinatenmessmaschinen (CMM), geodätischen Geräten, Roboterarmen, articulated arms, Motoren oder hydraulischen Aktuatoren. Die Sensoreinheit ist dabei an dem einen, der Geber an dem anderen Glied angebracht. Zur Bestimmung einer Relativposition erfasst ein Sensor der Sensoreinheit wenigstens ein Geberelement des Gebers. Um den gesamten möglichen Relativbewegungsbereich abdecken zu können, erstreckt sich entweder der Geber über diesen Bewegungsbereich, z.B. in Form einer langgestreckten Massverkörperung als fest positioniertes Glied, und die Sensoreinheit ist beweglich und ausgebildet zur Erfassung eines eng begrenzten Bereichs des Gebers. Oder die Sensoreinheit ist fest positioniert und erstreckt sich über den zu erfassenden Bereich und der bewegbare Geber, z.B. ein Magnettarget, weist eine eng begrenzte Ausdehnung auf. Als weitere Alternative ist die Sensoreinheit fest positioniert und zur Erfassung eines eng begrenzten Bereichs ausgebildet und ein langgestreckter Geber bewegt sich relativ zur Sensoreinheit.

In einigen solchen Systemen weist die verwendete Sensoreinheit wenigstens zwei einzelne Sensoren auf. Dabei sind die Sensoren mittels Befestigung an einem Substrat, z.B. das einer Leiterplatine, definiert zueinander beabstandet, wobei der Wert des Sensorabstands in einer Steuer- und Auswerteeinheit des Systems hinterlegt ist. Die Sensoren sind so ausgestaltet, dass sie jeweils wenigstens ein Geberelement erfassen können. Die EP 1195880 A1 offenbart ein solches System aus einem Geber und einer Sensoreinheit, welche zwei zueinander beabstandete Sensoren einer Sensoreinheit verwendet, um anhand des bekannten Sensorabstands Fehlerwerte für die Geberelemente eines beweglichen Gebers zu bestimmen.

Die FR 2974897 A1 offenbart eine Messvorrichtung zum Messen eines Abstands oder Wegs mit zwei zueinander beweglichen Einheiten und einem Verbindungsstück zur thermisch definierten Abstandshalterung.

Die EP 0416391 A2 offenbart eine Längen- oder Winkelmesseinrichtung mit einem aus Glas oder Glaskeramik bestehenden Teilungsträger, welcher auf einem Flüssigkeitsfilm reibungsfrei schwimmt.

Die EP 1882989 A2 behandelt eine Positionsmessvorrichtung für einen Bilderstellungsapparat, wobei die Messvorrichtung mehrere Gehäuseeinheiten mit Detektionseinheiten und eine Halterung aufweist. Die Gehäuseeinheiten und die Halterung sind dergestalt ausgebildet, dass Temperatureinflüsse kompensiert werden.

Umwelteinflüsse und/oder Alterungsphänomene können bei derartigen Sensoreinheiten eine Änderung des Abstands der Sensoren zueinander verursachen. Ein derartiger Umwelteinfluss kann beispielsweise Wärmeeinwirkung sein, welche zu einer Ausdehnung des Substrats führt, deren Ausmass vom thermischen Ausdehnungskoeffizienten (engl: coefficient of thermal expansion, kurz: CTE) des Substratmaterials abhängt. Dient beispielsweise eine Leiterplatine als Substrat, entwickelt sich aufgrund der dort fliessenden elektrischen Ströme Wärme bei Benutzung der Sensoreinheit, wodurch sich die Leiterplatine ausdehnt. Bei gängigen Leiterplatinen aus FR-4-Laminat beträgt der thermische Ausdehnungskoeffizient ca. 15·10⁻⁶ *K*^{*-*1}, so dass sich ein Sensorabstand von z.B. 20mm bei einer Temperaturänderung von 10K um 3µm verändert. Hochpräzise Messwertbestimmungen können durch derartige Änderungen des Sensorabstands erschwert oder verunmöglicht werden.

Die DE 3818044 A1 offenbart eine Messvorrichtung zur inkrementellen Positionsbestimmung zwischen einer Sensoreinheit und einem Geber. Der Geber ist ausgebildet als langgestreckte Massverkörperung mit Präzisionsteilung. Die Sensoreinheit weist ein Substrat auf, an welchem wenigstens zwei photoelektrische Zeilensensoren angebracht sind, wobei die Sensoren in Richtung der Erstreckung der Massverkörperung beabstandet sind. Die Massverkörperung und das Substrat bestehen aus den gleichen Materialien oder zumindest aus Materialien mit gleichem thermischem Ausdehnungskoeffizienten, wobei die Materialien vorzugsweise transparente Glaskeramiken oder Quarze mit vernachlässigbarem thermischem Ausdehnungskoeffizienten sind. Die Massverkörperung weist einen Positionscode mit abwechselnden inkrementellen und absoluten Abschnitten auf, ausgebildet als Abfolgen von lichtdurchlässigen und lichtundurchlässigen Inkrementen. Der Abstand der Sensoren zueinander ist derart angepasst an den Abstand der absoluten Abschnitte zueinander, dass mit wenigstens einem der Sensoren in jeder Positionierung von Sensoreinheit zu Massverkörperung wenigstens ein absoluter Codeabschnitt erfassbar ist. Aus den erfassten Inkrementen wird die Position bestimmt. Nachteilig an der offenbarten Messvorrichtung ist, dass für hochpräzise Messungen sowohl Sensoreinheit als auch Geber hochpräzise ausgeführt und Sensorabstand und Abschnittsabstand der absoluten Codeabschnitte genau aufeinander abgestimmt sein müssen. Zudem ist nachteilig, dass zur Ermittlung einer Relativposition alle von allen Sensoren erfassten Codeelemente herangezogen werden müssen. Die Fragestellungen, welcher Betrag der thermische Ausdehnungskoeffizient des Substratmaterials erforderlich ist, damit er als vernachlässigbar angesehen werden kann, und wie zur Bestimmung des Sensorabstands die Sensoren am Substrat zu befestigen sind, werden in der DE 3818044 A1 weder thematisiert noch offenbart.

Die Aufgabe der vorliegenden Erfindung besteht daher in der Bereitstellung eines verbesserten Systems mit einer Sensoreinheit mit wenigstens zwei zueinander beabstandeten Sensoren und mit einem Geber, das hochpräzise Messungen auch ohne hochpräzisen Geber erlaubt.

Diese Aufgabe wird erfindungsgemäss durch die Merkmale der unabhängigen Ansprüche und/oder durch Merkmale der abhängigen Ansprüche gelöst bzw. diese Lösungen weitergebildet.

Die vorliegende Erfindung betrifft ein System zur Bestimmung von Relativpositionen mit einem Geber und einer Sensoreinheit. Die Sensoreinheit und der Geber sind in einer Erstreckungsrichtung relativ zueinander beweglich und der Geber weist in Erstreckungsrichtung Geberelemente auf. Eine Bestimmung einer Relativposition im Sinne der Erfindung ist die Bestimmung einer Position von Sensoreinheit und Geber relativ zueinander. Die Sensoreinheit weist einen ersten Sensor und wenigstens einen weiteren, zweiten Sensor auf zum Erfassen von Geberelementen. Der erste und der zweite Sensor weisen in der Erstreckungsrichtung einen Abstand zueinander auf (im Folgenden als Sensorabstand bezeichnet), der so bemessen ist, dass mit der Sensoreinheit in einem Schritt, bei unveränderter Relativpositionierung von Sensoreinheit und Geber, wenigstens ein Geberelement durch den ersten Sensor und wenigstens ein Geberelement durch den zweiten Sensor erfassbar sind. Um den Sensorabstand hochpräzise zu bestimmen, weist das System ein Bauteil aus einem form- und alterungsbeständigen Material auf, dessen thermischer Ausdehnungskoeffizient dem Betrag nach in einem Bereich von 0 bis höchstens 5·10⁻⁶ *K*⁻¹ liegt, und zwar insbesondere in Erstreckungsrichtung.

Das Bestimmen des Sensorabstands erfolgt dabei in einigen Ausführungsformen vor der Bestimmung einer Relativposition. In anderen besonders bevorzugten Ausführungsformen ist das Bestimmen des Sensorabstands auch simultan zum Bestimmen einer Relativposition möglich.

Das Erfassen von Geberelementen erfolgt beispielsweise nach optischem, induktivem, magnetischem oder kapazitivem Wirkungsprinzip. In bevorzugten Ausführungsformen ist das System ausgebildet zur opto-elektronischen oder kapazitiv-elektronischen Bestimmung von Relativpositionen. Im Falle eines opto-elektronischen Systems weist das System in einigen Ausführungsformen eine Abbildungsoptik auf, welche optional am Bauteil selbst befestigt oder darin integriert ist. Das Erfassen von Geberelementen erfolgt beim ersten und zweiten Sensor relativ zu einem Erfassungsbezugspunkt, der bei jedem der beiden Sensoren als eine sensorinterne Position bzw. sensorinterne Koordinate definiert ist. Weist der Geber z.B. eine kontinuierliche Geberelementverteilung auf, wird zum Bestimmen einer Relativposition genau dasjenige Geberelement erfasst, das sich bezogen auf die Erstreckungsrichtung am Erfassungsbezugspunkt selbst befindet, mit anderen Worten das in Erstreckungsrichtung keinen Versatz zum Erfassungsbezugspunkt aufweist. Bei einem analogen, kontinuierlichen Verlauf der Intensität der durch die Geberelemente verursachten physikalischen Wirkung (beispielsweise Magnetfeldintensität, Lichtintensität etc.) und einem Sensor mit punktförmigem Erfassungsfeld, welches also deckungsgleich mit dem Erfassungsbezugspunkt ist, wird beispielsweise schlicht diese Intensität im punktförmigen Erfassungsfeld erfasst. Alternativ wird, insbesondere bei einer diskontinuierlichen Verteilung der Geberelemente bzw. der Intensitätsverteilung ihrer physikalischen Wirkung und einem Sensor mit ausgedehntem Erfassungsfeld, ein Geberelement in Bezug zu einem Erfassungsbezugspunkt erfasst, indem seine Distanz bzw. die Distanz zum Intensitätspeak (zumindest) in Erstreckungsrichtung zum Erfassungsbezugspunkt bestimmt wird. Dabei befindet sich der Erfassungsbezugspunkt, wie oben beschrieben, innerhalb des Erfassungsfelds in einer sensorintern definierten Lage. Eine Distanzbestimmung erfolgt beispielsweise dadurch, dass ein durch das Erfassen erzeugtes Signal in seiner Signalstärke mit einer Referenzsignalstärke verglichen wird. Die Referenzsignalstärke ist dabei die Signalstärke, die bei einer versatzlosen Erfassung detektierbar wäre. Eine solche Referenzsignalstärke kann in einer Steuer- und Auswerteeinheit des Systems hinterlegt sein oder anhand weiterer Abtastungen ermittelt werden. Alternativ erfolgt eine Distanzbestimmung durch positionssensitives Erfassen, z.B. bei Sensoren, welche einen linearen oder flächenhaften sensitiven Array aufweisen. Erfolgt ein Erfassen opto-elektronisch, kann eine Distanz z.B. durch Ermitteln der Position eines Helligkeitspeaks auf einem positionssensitiven Array erfolgen, wobei vorzugsweise der Detektornullpunkt den Erfassungsbezugspunkt darstellt. Alternativ oder zusätzlich kann bei Vorliegen von Codeelementen, welche als Muster ausgebildet sind, eine Distanz anhand der erfassten Lage eines oder mehrerer Muster bestimmt werden.

Der Abstand der Erfassungsbezugspunkte des ersten Sensors und des zweiten Sensors definiert einen Erfassungsabstand. Wird in Erstreckungsrichtung der Abstand der Sensoren viel grösser gewählt als die Ausdehnung der Sensoren selbst, ist der Erfassungsabstand im Wesentlichen durch den Sensorabstand gegeben, oder mit anderen Worten Erfassungsabstand und Sensorabstand können unter diesen Umständen als gleich angenommen werden.

Das Bauteil zur hochpräzisen Bestimmung des Sensorabstands aus einem form- und alterungsbeständigen Material ist bei einer ersten Gruppe erfindungsgemässer Systeme ausgebildet zur messungsbehafteten Bestimmung des Sensorabstands durch das System selbst. "Messungsbehaftet" bedeutet, dass zur Bestimmung des Sensorabstands eine Messung mit dem System durchgeführt wird. Hierzu weist das Bauteil einen Massstab auf, der hochpräzise eine Referenzlänge definiert.

In einer zweiten Gruppe erfindungsgemässer Systeme wird der Sensorabstand vor Einbau in das System herstellerseitig hochpräzise ausgemessen und sein Wert in der Steuer- und Auswerteeinheit des Systems hinterlegt. In dieser zweiten Gruppe ist durch das Bauteil aus einem form- und alterungsbeständigen Material der Sensorabstand hochpräzise bestimmt, indem das Bauteil als Substrat dient, durch welches der erste und der zweite Sensor relativ zueinander positionsfixiert sind. Mit anderen Worten sind die Sensoren derart am Bauteil befestigt, dass sie in ihrer Position zueinander (zumindest in Erstreckungsrichtung) temperatur- und alterungsunabhängig festgelegt sind und zwar aufgrund der Eigenschaften des Materials des Bauteils. In einigen Ausführungsformen ist der Sensorabstand vor dem Einbau herstellerseitig bestimmt und in der Steuer- und Auswerteeinheit hinterlegt; bei anderen Ausführungsformen ist der Sensorabstand nach Einbau beim Kunden bestimmbar und in der Steuer- und Auswerteeinheit hinterlegbar.

Erfindungsgemäss sind ebenso Ausführungsformen möglich, bei denen das Bauteil sowohl einen Massstab aufweist als auch als Substrat zur Positionsfixierung dient.

Weist das Bauteil einen Massstab auf, definiert der Massstab eine Referenzlänge mit einem relativen Fehler im Bereich von höchstens 5·10⁻⁶, insbesondere im Bereich von höchstens 4·10⁻⁶ bzw. höchstens 1·10⁻⁶, in Ausführungsformen für äusserst präzise Anwendungen im Bereich von höchstens 5·10⁻⁷ Der Wert der Referenzlänge ist vorzugsweise vor Einbau des Bauteils herstellerseitig bestimmt und ist in einer Steuer- und Auswerteeinheit des Systems hinterlegt. Alternativ ist in einigen Ausführungsformen der Wert der Referenzlänge bzw. die Massstabslänge nach Einbau beim Kunden z.B. interferometrisch bestimmbar und in der Steuer- und Auswerteeinheit hinterlegbar.

Die Referenzlänge ist in einigen Ausführungsformen durch die Länge des Massstabs in Erstreckungsrichtung selbst definiert. Der Massstab ist dabei derart ausgebildet, d.h. bemessen und angeordnet, dass ein Massstabsende vom ersten Sensor und das andere Massstabsende vom zweiten Sensor erfassbar sind. Das Bauteil und der Sensorabstand sind also abgestimmt aufeinander bemessen, so dass die Massstabsenden im Erfassungsbereich der Sensoren liegen und das Bauteil zumindest an den Massstabsenden eine physikalische Eigenschaft besitzt, anhand derer es von den Sensoren detektierbar ist. Z.B. weisen bei Vorliegen einer magnetisch-elektronischen Sensoreinheit die Massstabsenden einen magnetischen, bei Vorliegen einer kapazitiv-elektronischen Sensoreinheit einen dielektrischen, bei Vorliegen einer induktiv-elektronischen Sensoreinheit einen metallischen Bereich auf. Der Sensorabstand wird bestimmt, indem das eine Massstabsende in Bezug zum Erfassungsbezugspunkt des ersten Sensors und das zweite Massstabsende in Bezug zum Erfassungsbezugspunkt des zweiten Sensors erfasst werden, wozu optional auch die Stärke des detektierten Messsignals berücksichtigt und ausgewertet wird. Anhand der hinterlegten Referenzlänge wird aus der Kenntnis der Positionen der Massstabsenden in Bezug zu den Erfassungsbezugspunkten der aktuelle Erfassungsabstand bzw. Sensorabstand ermittelt.

Im Fall eines opto-elektronischen Systems können die Massstabsenden beispielsweise im Schattenwurf oder durch Reflexion auf die beiden positionssensitiven Photosensoren projiziert werden und die Positionen der beiden Hell-Dunkel-Übergänge auf den Sensoren in Bezug zu den Erfassungsbezugspunkten bestimmt werden. Optional weist das System eine Abbildungsoptik auf zur Abbildung des Massstabs auf die Photosensoren, welche am Bauteil befestigt oder integriert sein kann. Der Abstand der beiden Hell-Dunkel-Übergänge entspricht (ggf. korrigiert um vorab ausgemessene und in der Steuer- und Auswerteeinheit hinterlegte Korrekturwerte für das Abbildungsverhalten der Sensoren) der Referenzlänge, so dass aus den Positionen der beiden Hell-Dunkel-Übergänge auf den Sensoren und der Referenzlänge der aktuelle Erfassungsabstand bzw. Sensorabstand berechnet wird.

Alternativ oder zusätzlich weist der Massstab in einigen Ausführungsformen einen absoluten und/oder inkrementellen Positionscode aus Codeelementen auf. Eine Referenzlänge ist in diesem Fall durch den Abstand der Codeelemente zueinander definiert. Mittels Erfassen wenigstens eines Codeelements durch einen Sensor sind anhand von in der Steuer- und Auswerteeinheit hinterlegter Information vom System Positionswerte zu den Codeelementen bestimmbar. Der Sensorabstand und die Anordnung der Codeelemente auf dem Massstab sind dazu so aufeinander abgestimmt, dass vom ersten und vom zweiten Sensor jeweils wenigstens ein Codeelement erfassbar ist. In einigen Ausführungsformen mit Zeilen- oder Flächensensoren werden jeweils mehr als ein Codeelement durch jeden Sensor erfasst und zur Steigerung der Genauigkeit und/oder Zuverlässigkeit der Sensorabstand anhand mehrere Paare aus Codeelementen des ersten und des zweiten Sensors redundant bestimmt. Zur Bestimmung des Sensorabstands werden wenigstens ein erstes Codeelement in Bezug zum Erfassungsbezugspunkt des ersten Sensors und wenigstens ein zweites Codeelement in Bezug zum Erfassungsbezugspunkt des zweiten Sensors erfasst. Dies erfolgt entweder bei gleichbleibender Relativpositionierung von Sensoreinheit und Massstab oder indem zuerst das erste Codeelement vom ersten Sensor erfasst wird und dann die Relativpositionierung so geändert wird, dass das erste Codeelement vom zweiten Sensor und ein zweites Codeelement vom ersten Sensor erfasst werden, wobei optional während der Änderung der Relativpositionierung die dazwischen liegenden Codeelemente ebenfalls erfasst werden.

Anhand der hinterlegten Positionscodeinformation zu den wenigstens zwei erfassten Codeelementen und der hinterlegten Referenzlänge wird der aktuelle Erfassungsabstand bzw. Sensorabstand ermittelt. Die Referenzlänge ist definiert durch den Abstand zweier Codeelemente zueinander. Bei Vorliegen eines inkrementellen Codes ist der Abstand zweier unmittelbar benachbarter Codeelemente als Referenzlänge definiert und der Sensorabstand wird durch ein Aufsummieren der Abstände der Codeelemente zwischen dem ersten und dem zweiten Codeelement ermittelt. Hierfür weist das System entweder weitere Sensoren auf, und/oder die Sensoren sind als Zeilen- bzw. Flächensensoren ausgebildet und/oder die Sensoren werden relativ zum Massstab bewegt.

Bei Vorliegen eines Absolutcodes sind Abstände solcher Codeelemente hinterlegt, welche als erstes und zweites Codeelement gemeinsam erfassbar sind, so dass zum Ermitteln des Sensorabstands der zum erfassten ersten und zweiten Codeelement gehörige Abstand abgerufen wird. Alternativ wird der Sensorabstand ermittelt, indem der Abstand der in einem Schritt erfassten ersten und zweiten Codeelemente als Differenz aus den zugehörigen hinterlegten Positionswerten berechnet wird. Weist ein Codeelement einen Versatz zum Erfassungsbezugspunkt auf, wird seine Distanz zum Erfassungsbezugspunkt beim Ermitteln des Sensorabstands mit berücksichtigt.

In einer ersten Ausführungsform ist das Bauteil aus dem form- und alterungsbeständigen Material geberseitig angeordnet, wobei das Bauteil mit dem Geber in einigen Ausführungsformen eine Einheit dergestalt bildet, dass die Einheit als Ganzes relativ zur Sensoreinheit bewegbar ist. In anderen Ausführungsformen ist die Einheit ortsfest und die Sensoreinheit wird relativ zum Geber bewegt. In einigen Ausführungsformen bildet das Bauteil eine Art Verlängerung des Gebers, indem es an einem Geberende anschliesst, wobei das Bauteil in diesen Ausführungsformen einen Massstab mit Codeelementen aufweist. In anderen Ausführungsformen des gleichen Typs weist das System je ein Bauteil an jedem Geberende auf, welches jedes für sich ein Bestimmen des Sensorabstands ermöglicht. Zur Bestimmung des Sensorabstands wird in diesen Ausführungsformen die Sensoreinheit soweit entlang der Erstreckungsrichtung relativ zum Geber verschoben, dass das Geberende überschritten wird und der erste und der zweite Sensor den Massstab erfassen können.

Sind die Sensoren mit ihren Erfassungsfeldern in orthogonaler Richtung zur Erstreckungsrichtung breiter als der Geber, beispielsweise wenn diese als Flächensensoren ausgestaltet sind, so ist es hinsichtlich kürzerer Verschiebungswege vorteilhaft, dass mehrere Bauteile entlang der Erstreckungsrichtung unmittelbar neben dem Geber angeordnet sind, welche jedes für sich ein Bestimmen des Sensorabstands ermöglichen, so dass ein Bestimmen des Sensorabstands an mehreren Orten entlang der Erstreckungsrichtung erfolgen kann.

Alternativ zur Anordnung am Geber ist das Bauteil in einer weiteren Ausführungsform an der Sensoreinheit angeordnet, so dass das Bauteil relativ zum Geber bewegbar ist. In einer ersten Variante dieses Ausführungstyps weist das Bauteil wiederum einen Massstab mit Codeelementen auf. Um ein Erfassen des Massstabs zu ermöglichen, ist dieser im Erfassungsfeld der Sensoren angeordnet, wozu das Bauteil den Massstab vorteilhaft an einer sensorzugewandten Seite aufweist.

Um das Erfassen von Codeelementen zur Bestimmung des Sensorabstands zu ermöglichen, deckt das Bauteil bei Anordnung an der Sensoreinheit das Erfassungsfeld des ersten und des zweiten Sensors zumindest teilweise ab. Um ein Erfassen von Geberelementen, die von den Sensoren aus betrachtet hinter dem Bauteil liegen, trotz dieser Abdeckung zu ermöglichen, ist das Bauteil in einigen Ausführungsformen derart ausgebildet, dass es zumindest weitgehend durchlässig ist für die physikalische Eigenschaft, anhand derer die Geberelemente von den Sensoren detektiert werden. Dies ist durch entsprechende Wahl von Bauteilmaterialparametern wie Zusammensetzung, Dicke oder Strukturierung erreichbar. Zur besseren Unterscheidung des Erfassens von Geberelementen und Codeelementen können für deren jeweilige Erfassung unterscheidbare physikalische Eigenschaften herangezogen werden. Beispielsweise können sich die detektierten Messsignale von Geberelementen in ihrer Stärke deutlich von derjenigen der Codeelemente abheben.

Erfolgt ein Erfassen von Geberelementen optisch, so wird die Dicke oder die Art des Materials des Bauteils bzw. des Massstabs so gewählt, dass es transparent für das Licht ist, mit dem der Geber be- oder durchleuchtet wird. In einigen Ausführungsformen werden Geberelemente und Codeelemente mit Licht je unterschiedlicher Wellenlänge, Polarisationszustand oder aufgrund von Frequenzmodulation unterscheidbarem Licht beleuchtet.

Sind die Sensoren als Flächensensoren ausgebildet, so dass sie nicht nur in Erstreckungsrichtung, sondern auch in einer Richtung orthogonal dazu ausgedehnt sind, wird alternativ das Material des Bauteils ohne Berücksichtigung einer Durchlässigkeit gewählt und stattdessen das Bauteil in dieser orthogonalen Richtung derart schmal geformt, dass es die geberzugewandte Seite der Sensoren in dieser Richtung nur teilweise abdeckt. Mit anderen Worten erfolgt bei solchen Ausführungsformen ein Erfassen von Geberelementen am Bauteil bzw. Massstab vorbei. Der Geber ist entsprechend in dieser orthogonalen Richtung breiter als das Bauteil ausgebildet oder in dieser orthogonalen Richtung relativ zum Bauteil versetzt angeordnet.

Ein entsprechend durchlässiges oder schmal geformtes Bauteil bietet auch bei geberseitiger Anordnung des Bauteils Vorteile. Beispielsweise ist ein solches Bauteil auf dem Geber (und damit zwischen dem Geber und der Sensoreinheit) fest montierbar. Das Bauteil ist auf diese Weise entlang der Erstreckungsrichtung beliebig positionierbar, was hinsichtlich kürzerer Verschiebungswege vorteilhaft ist. In einigen Ausführungsformen weist das System mehrere solcher Bauteile an verschiedenen Orten entlang der Erstreckungsrichtung auf, welche jedes für sich ein Bestimmen des Sensorabstands ermöglichen, so dass ein Bestimmen des Sensorabstands an mehreren Orten entlang der Erstreckungsrichtung erfolgen kann. Weiterhin lässt sich damit ein Bauteil realisieren, welches durch den Benutzer oder automatisiert flexibel und ggf. nur bei Bedarf am Geber angebracht werden kann. Kann davon ausgegangen werden, dass während einer Messung keine den Sensorabstand verändernde Umwelteinflüsse auftreten oder sind Änderungen des Sensorabstands während einer speziellen Messaufgabe irrelevant, wird das Bauteil vor der Messung am oder auf dem Geber zur Bestimmung des Sensorabstands angebracht, danach wieder entfernt und die Messung ohne das Bauteil durchgeführt. In einem solchen Fall sind die Forderungen nach Durchlässigkeit oder schmaler Formung des Bauteils reduziert bzw. unnötig.

Bei einem System mit einem Bauteil, das einen Massstab aufweist, welcher eine Referenzlänge definiert, wird der Sensorabstand also dadurch bestimmt, dass wenigstens ein Teil des Massstabs mittels der Sensoreinheit erfasst wird. Hierdurch ist der Sensorabstand durch das System selbst jederzeit hochpräzise bestimmbar, insbesondere zeitgleich zu einer Positionsbestimmung anhand des Gebers, so dass eine hochpräzise Kenntnis des tatsächlichen Sensorabstands trotz Umwelteinflüsse wie Wärmeeinwirkung oder Alterungsphänomene erreicht wird.

Alternativ oder zusätzlich dient das Bauteil aus einem form- und alterungsbeständigen Material, dessen thermischer Ausdehnungskoeffizient dem Betrag nach in einem Bereich von 0 bis höchstens 5·10⁻⁶ *K*⁻¹ liegt, als Substrat, durch welches der erste und der zweite Sensor in ihren Positionen zueinander fixiert sind. Dabei ist der Sensorabstand durch eine herstellerseitige Messung mit einem relativen Fehler im Bereich von höchstens 5·10⁻⁶, insbesondere im Bereich von höchstens 4·10⁻⁶ bzw. höchstens 1·10⁻⁶, in Ausführungsformen für äusserst präzise Anwendungen im Bereich von höchstens 5·10⁻⁷, bestimmt.

In einer ersten Ausführungsform sind der erste Sensor und der zweite Sensor mit Hilfe des Bauteils dadurch positionsfixiert, dass sie seitlich am Bauteil anliegen und jeweils durch Beaufschlagung mit einer Kraft in Richtung Bauteil in dieser am Bauteil anliegenden Position gehalten werden. Durch diese Kräfte werden die Sensoren an das Bauteil gedrückt, wodurch ihr Abstand zueinander gleich bleibend ist. Hervorgerufen wird diese Kraft durch eine Feder- oder Spannvorrichtung, welche die Sensoreinheit aufweist. Eine solche Feder- oder Spannvorrichtung kann vom Gehäuse oder einer Halterung aus die Sensoren an das Bauteil drücken oder mit dem einen Ende am Bauteil selbst befestigt sein, um die Sensoren durch Druckkräfte am Bauteil zu halten. Zur Erhöhung der Lagestabilität in dieser Position weist das Bauteil in einigen Ausführungsformen Auflagekanten auf, die sich in Erstreckungsrichtung ausdehnen und auf denen die Sensoren mit einem Endbereich aufliegen. Das Bauteil ist direkt am Gehäuse der Sensoreinheit befestigt oder an einem anderen Element der Sensoreinheit, beispielsweise einer Leiterplatine oder einem Halterungselement.

In einer alternativen Ausführungsform sind der erste und der zweite Sensor zur Positionsfixierung fest mit dem Bauteil verbunden, welches geformt ist als eine Art Brücke, welche die zwei Sensoren miteinander verbindet und welche zwei Pfeiler aufweist, an deren unteren Enden die Sensoren befestigt sind. Die Befestigungsstellen befinden sich vorzugsweise an den geberabgewandten Seiten. Insbesondere falls die Sensoren und das Bauteil erheblich unterschiedliche thermische Ausdehnungskoeffizienten aufweisen, ist vorteilhafter Weise die Verbindungsstelle zwischen Sensor und Bauteil unter Berücksichtigung einer ausreichenden Festigkeit möglichst klein, um mechanische Spannungen bei Wärmefluss aufgrund unterschiedlicher Ausdehnung zu vermeiden. Sind die Sensoren dabei an einer Leiterplatine angeschlossen und werden von dieser getragen, ist das Bauteil entweder zum Grossteil in der Leiterplatine eingebettet oder es sind nur dessen Pfeiler durch die Leiterplatine hindurch geführt, wozu die Leiterplatine an dieser Stelle in Erstreckungsrichtung unterbrochen sein kann. In einigen Ausführungsformen nimmt das Bauteil zusätzlich zu seiner positionsfixierenden Funktion eine die Sensoren tragende Funktion ein.

Befinden sich die Erfassungsbezugspunkte des ersten und des zweiten Sensors nicht im Bereich der jeweiligen Befestigungsstellen zum thermisch stabilen Substrat und ist der thermische Ausdehnungskoeffizient des Sensormaterials bzw. die thermische Ausdehnung der Sensoren bei Wärmeeinwirkung nicht vernachlässigbar klein, dann können sich die Positionen der Erfassungsbezugspunkte relativ zur Befestigungsstelle aufgrund der thermischen Ausdehnung der Sensoren selbst verschieben. Damit auch in einem solchen Fall der Erfassungsabstand konstant bleibt, sind die Erfassungsbezugspunkte in gleicher Richtung entlang der Erstreckungsrichtung gleichweit zur jeweiligen Befestigungsstelle versetzt angeordnet. Dadurch bleiben (unter der Voraussetzung von Sensoren mit gleichem thermischem Ausdehnungsverhalten) die Positionen der Erfassungsbezugspunkte relativ zueinander und damit der Erfassungsabstand auch bei Wärmeeinwirkung auf die Sensoren gleich.

In einer weiteren Ausführungsform sind der erste und der zweite Sensor mit ihren geberzugewandten Seiten am Bauteil befestigt und zwar vorzugsweise mittels Bonding. Da das Bauteil in einem solchen Fall die Erfassungsfelder der Sensoren ganz oder teilweise abdeckt, sind Bauteil und Bonding so beschaffen, dass sie das Erfassen von Geberelementen erlauben, analog der weiter oben beschriebenen Beschaffenheit des einen Massstab aufweisenden Bauteils.

In einigen Ausführungsformen sind alternativ die Sensoren jeweils in zwei Zonen aufgeteilt. Die erste Zone ist der eigentliche Sensor in dem Sinn, dass diese Zone zur Erfassung von Geber-/Codeelementen ausgebildet ist. Die zweite Zone dient zur Befestigung des Sensors am Substrat. Eine derartige Zonenaufteilung dient in einigen Ausführungsformen durch Anordnung der Zonen quer zur Erstreckungsrichtung zum Erfassen von Geberelementen am Bauteil vorbei. Zudem kann dadurch ein Beschädigen der sensitiven ersten Zone durch den Befestigungsvorgang vermieden werden, was besonders bei gehäusefreien Sensoren von Vorteil ist.

Durch unterschiedliche thermische Ausdehnungskoeffizienten von Sensoren und der Einheit, an der sie angebracht sind (Bauteil und/oder Leiterplatine), können bei Wärmeeinwirkung mechanische Spannungen auftreten. Ist eine relative Verschiebung von Sensor und Einheit, an der sie angebracht sind, tolerierbar, sind die Verbindungsstellen in einigen Ausführungsformen dergestalt flexibel ausgeführt, dass sich Sensor und Bauteil bzw. Leiterplatine relativ zueinander im Rahmen der zu erwartenden thermisch bedingten Längenausdehnung bewegen können. Sind die Sensoren durch das Bauteil dergestalt positionsfixiert, dass Relativverschiebungen nachteilig sind, sind alternativ die Verbindungsstellen starr und die Sensoren dergestalt ausgebildet, dass sie die auftretenden mechanischen Spannungen ohne Beeinträchtigung ihrer Funktionsweise, vor allem auch hinsichtlich der Lage des Erfassungsbezugspunkts und der Messgenauigkeit, aufnehmen können. Hierzu sind Material und Form der Sensoren beispielsweise derart gewählt, dass die Sensoren sich auch unter Spannung nicht oder nur derart definiert verformen, dass ihr Leistungsvermögen bzw. die Messgenauigkeit nicht vermindert ist. In einigen Ausführungsformen sind alternativ das Bauteil und die Sensoren aus gleichen Materialien oder aus Materialien mit gleichem thermischem Ausdehnungskoeffizienten mit Beträgen im Bereich von 0 bis höchstens 5·10⁻⁶ *K*⁻¹. Da das System erfindungsgemäss vorteilhaft gehäusefreie Sensoren aufweist, welche gemäss dem gegenwärtigen Stand der Technik aus Silizium gefertigt sind, ist in diesen alternativen Ausführungsformen vorzugsweise das Bauteil ebenfalls aus Silizium gefertigt oder aus einem Material mit einem thermischen Ausdehnungskoeffizienten, der dem von Silizium gleicht oder sehr ähnlich ist.

Die Art der Ausführung von Verbindungsstellen zwischen Sensoren und der Einheit, an der sie angebracht sind (Bauteil und/oder Leiterplatine), erfolgt vorteilhaft angepasst an die im vorigen Absatz beschriebenen Fragestellungen. Flexible Verbindungsstellen sind vorzugsweise als weiche Lötstellen ausgebildet und starre Verbindungsstellen zwischen Einheiten mit unterschiedlichem thermischem Ausdehnungsverhalten sind vorzugsweise mittels Bonden gefertigt beispielsweise mittels anodischem Bonden oder Waferbonden. Verbindungsstellen zwischen Einheiten mit gleichem thermischem Ausdehnungsverhalten können sowohl durch Löten als auch durch Bonden, beispielsweise aber auch durch Kleben oder andere dem Fachmann bekannte Prozesse gefertigt sein.

In einigen Ausführungsformen weist das Bauteil elektrische Leiterbahnen auf, über welche die Sensoren zumindest teilweise elektrisch kontaktiert sind. Dadurch nimmt das Bauteil zusätzlich zu seiner Funktion der Bestimmung des Sensorabstands die Funktion einer Leiterplatine ein, wodurch eine herkömmliche Leiterplatine teilweise oder vollständig ersetzbar ist.

Für sehr hohe Ansprüche an die Präzision der Messergebnisse weist das System ein Thermometer auf, mit welchem die Temperatur des Bauteils und/oder bei der Sensoren bestimmbar ist. Denn auch wenn der thermische Ausdehnungskoeffizient des Bauteils höchstens 5·10⁻⁶ *K*⁻¹ beträgt, so kann für bestimmte Messungen eine so kleine Längenänderung des Bauteils und damit des Sensorabstands dennoch problematisch sein. Für solche Fälle wird jeweils die aktuelle Temperatur des Bauteils mittels des Thermometers erfasst. Zudem sind in der Steuer- und Auswerteeinheit Informationen hinsichtlich des thermischen Ausdehnungskoeffizienten des Bauteilmaterials bzw. Sensormaterials hinterlegt, beispielsweise der Wert der Längenausdehnung des Bauteils bzw. der Sensoren in Erstreckungsrichtung in Abhängigkeit von der Temperatur in Bezug auf eine Referenztemperatur oder der Wert des thermischen Ausdehnungskoeffizienten. Falls das Material (hinsichtlich der erforderlichen Präzision) einen thermischen Ausdehnungskoeffizienten mit nicht vernachlässigbarer Temperaturabhängigkeit aufweist, sind optional der thermische Ausdehnungskoeffizient in seiner Abhängigkeit von der Temperatur oder Längenausdehnungswerte des Bauteilmaterials für verschiedene Temperaturen in der Steuer- und Auswerteeinheit hinterlegt. Mittels des Thermometers wird zur Bestimmung des Sensorabstands die Temperatur des Bauteils bzw. der Sensoren gemessen und bei der Bestimmung des Sensorabstands berücksichtigt. Dazu wird anhand der Temperatur und der hinterlegten Information ein Wert der thermisch bedingten Ausdehnung des Bauteils und/oder der Sensoren in Erstreckungsrichtung berechnet. Weist das Bauteil einen Massstab auf, wird die Referenzlänge anhand dieses rechnerischen Werts korrigiert, dient das Bauteil als Substrat zur Positionsfixierung, wird der hinterlegte Sensorabstand anhand dieses rechnerischen Werts korrigiert. Temperaturänderungen können bei diesen Ausführungsformen also zusätzlich rechnerisch kompensiert werden. Alternativ oder zusätzlich weist das System Mittel auf, mit welchen die Temperatur der Sensoreinheit, des Bauteils oder der Sensoren gezielt beeinflussbar ist. Mit einer solchen Kühlung bzw. Heizung wird vorteilhaft die Temperatur der Sensoreinheit, des Bauteils oder der Sensoren konstant gehalten, wodurch temperaturbedingte Änderungen des Sensorabstands vermieden werden.

In einigen Ausführungsformen gilt für den Betrag des thermischen Ausdehnungskoeffizienten des Bauteilmaterials der erfindungsgemässe Bereich von 0 bis höchstens 5·10⁻⁶ *K*⁻¹ in einem Temperaturbereich von 253K bis 343K, welcher Tief- und Hochtemperaturanwendungen umfasst. Insbesondere gilt der spezifizierte Betragsbereich in besonderen Ausführungsformen in einem Temperaturbereich von 288K bis 303K, welcher im Rahmen üblicher Arbeitstemperaturen liegt. Im Speziellen gilt dies, vorzugsweise für Anwendungen in klimatisierten Räumen, in einem Temperaturbereich von 291K bis 295K.

In einigen Ausführungsformen liegt der thermische Ausdehnungskoeffizient des form- und alterungsbeständigen Materials, aus welchem das Bauteil gefertigt ist, dem Betrag nach innerhalb eines Bereichs von 0 bis 4·10⁻⁶ *K*⁻¹, in besonderen Ausführungsformen für höhere Präzisionsanforderungen dem Betrag nach innerhalb eines Bereichs von 0 bis 1·10⁻⁶ *K*⁻¹, in speziellen Ausführungsformen mit sehr hohen Anforderungen an die Präzision dem Betrag nach innerhalb eines Bereichs von 0 bis 3·10⁻⁷ *K*⁻¹, wodurch der Sensorabstand noch präziser bestimmt bzw. bestimmbar ist. In einigen Ausführungsformen sind die Sensoren und das Bauteil derart aufeinander abgestimmt, dass der thermische Ausdehnungskoeffizient des Bauteilmaterials gleich oder höchstens so gross ist wie der thermische Ausdehnungskoeffizient der Sensoren.

Die Wahl des Bauteilmaterials hinsichtlich seines thermischen Ausdehnungskoeffizienten kann davon abhängig gemacht werden, ob das System zur rechnerischen Temperaturkompensation ausgebildet ist oder nicht. Erfolgt keine rechnerische Temperaturkompensation, sind die im vorigen Absatz spezifizierten kleinen Bereiche, insbesondere der Bereich von 0 bis 3·10⁻⁷ *K*⁻¹, für den Betrag des thermischen Ausdehnungskoeffizienten des Bauteilmaterials hinsichtlich der Präzision der Sensorabstandbestimmung vorteilhaft. Erfolgt stattdessen erfindungsgemäss eine rechnerische Berücksichtigung der Bauteiltemperatur, wird dies genutzt, um bei relativ kleinem thermischen Ausdehnungskoeffizienten eine höhere Präzision zu erreichen oder alternativ bei gleich bleibender Präzision einen relativ grossen Wert des thermischen Ausdehnungskoeffizienten dem Betrag nach bis zum spezifizierten Wert von 5·10⁻⁶ *K*⁻¹ zu erlauben und damit geringere Anforderungen an das Bauteilmaterial zu stellen, wodurch Kostenvorteile bei der Herstellung des Bauteils und damit des Systems erreichbar sind.

Das System zur Bestimmung einer Relativposition ist in einigen Ausführungsformen ausgebildet als Linearencoder.

Dabei ist der Geber ausgebildet als Massverkörperung mit Geberelementen, welche einen inkrementellen oder absoluten Positionscode bilden. In speziellen Ausführungsformen ist ein solches System Bestandteil einer 3D-Koordinatenmessmaschine (CMM) zur Bestimmung von Relativpositionen entlang einer Messachse.

Der Abstand des ersten und des zweiten Sensors zueinander liegt in den meisten Ausführungsformen im Bereich von 1 mm bis 100 mm. Insbesondere bei Vorliegen einer opto-elektronischen oder kapazitiv-elektronischen Sensoreinheit liegt der Sensorabstand optional im Bereich von 5 mm bis 50 mm, Ausführungsformen für spezielle Anwendungen wie der Einsatz in einer CMM weisen beispielsweise einen Sensorabstand im Bereich von 10 mm bis 30 mm auf. Als besonders vorteilhaft hat sich hier auch ein Sensorabstand von 20mm erwiesen.

Der Sensorabstand kann unabhängig vom Abstand einzelner Geberelemente oder Gruppen von Geberelementen zueinander festgelegt sein. Die vorliegende Erfindung bietet also den Vorteil, dass Sensorabstand und Geberelementabstände lediglich dahingehend abgestimmt aufeinander gewählt werden müssen, dass in einem Schritt wenigstens ein Geberelement durch den ersten Sensor und wenigstens ein Geberelement durch den zweiten Sensor erfassbar sind. Es ist beispielsweise nicht erforderlich, dass der Sensorabstand derart an die Anordnung von einen Positionscode bildenden Geberelementen angepasst ist, dass in einem Schritt spezielle Positionscodeabschnitte durch den ersten und den zweiten Sensor erfassbar sind. Gleichfalls ist das erfindungsgemässe System unabhängig davon realisierbar, ob ein absoluter oder inkrementeller Positionscode verwendet wird. Ausserdem kann das Material, aus dem der Geber gefertigt ist, unabhängig vom Bauteilmaterial gewählt werden. Es ist nicht notwendig, dass Geber und Bauteil aus dem gleichen Material sind und auch nicht, dass sie den gleichen thermischen Ausdehnungskoeffizienten aufweisen. Damit bietet das erfindungsgemässe System den Vorteil einer in mehrfacher Hinsicht grösseren Gestaltungsfreiheit von Geber und/oder Sensoreinheit. Da zudem an den Geber nicht die gleichen hohen Anforderungen an die Eigenschaften des Materials wie an das Bauteil gestellt werden, ergeben sich zumindest bei erfindungsgemässen Systemen mit einem langen und damit materialaufwändigen Geber geringere Systemherstellungskosten als bei Präzisionssystemen zur Bestimmung einer Relativposition nach dem Stand der Technik.

Weiterhin ist bei der vorliegenden Erfindung vorteilhaft, dass durch das form- und alterungsbeständige Bauteil der Abstand des ersten und des wenigstens zweiten Sensors jederzeit hochpräzise bestimmt bzw. bestimmbar ist, also auch während der eigentlichen Messung, d.h. während der Relativpositionsbestimmung zwischen Sensoreinheit und Geber. Der Sensorabstand bleibt aufgrund der Anordnung von Bauteil und Sensoren zeitlich konstant und/oder sein aktueller Wert kann mittels des Bauteils hochpräzise gemessen werden, ohne das hierzu externe Messvorrichtungen notwendig sind.

Zudem ist vorteilhafter Weise das erfindungsgemässe System unabhängig von der Art des Erfassens von Geberelementen realisierbar. Das Erfassen kann auf optischem, kapazitiven, induktiven, magnetischen oder anderen physikalischen Prinzipien beruhen. Weiter ist das System in einigen Ausführungsformen vorteilhaft dergestalt ausgebildet, dass für Messungen zur Positionsbestimmung, in denen der Sensorabstand keine Rolle spielt und daher der Einsatz mehrerer Sensoren nicht erforderlich ist, wahlweise nur einer oder eine bestimmte Kombination der vorhanden Sensoren einsetzbar ist.

Die vorliegende Erfindung betrifft ausserdem ein Verfahren zum hochpräzisen Bestimmen eines Sensorabstands eines erfindungsgemässen Systems mit einem ersten Sensor, wenigstens einem zweiten Sensor und einem Bauteil aus einem form- und alterungsbeständigen Material. Mittels des Bauteils ist der den Sensorabstand entweder dadurch bestimmbar, dass die Sensoren in einer ausgemessenen und hinterlegten Position zueinander durch das Bauteil positionsfixiert sind oder dadurch, dass das Bauteil einen Massstab aufweist, der eine Referenzlänge definiert und die Sensoren wenigstens Teile des Massstabs erfassen und ihr Abstand zueinander anhand der Referenzlänge des Massstabs bestimmbar ist. Das Material des Bauteils weist dabei einen thermischen Ausdehnungskoeffizienten auf, dessen Wert dem Betrag nach in einem Bereich liegt von 0 bis 5·10⁻⁶ *K*⁻¹, insbesondere von 0 bis 1·10⁻⁶ *K*⁻¹, im Speziellen von 0 bis 6·10⁻⁷ *K*⁻¹. Die Referenzlänge ist dabei mit einer ebenso grossen Genauigkeit bestimmt bzw. ausgemessen.

Weist das Bauteil einen Massstab auf, ist in einigen Ausführungsformen die Referenzlänge gleich der Länge des Massstabs. Die Referenzlänge ist in einer Steuer- und Auswerteeinheit des Systems hinterlegt. In diesem Fall wird der Sensorabstand anhand der hinterlegten Referenzlänge bestimmt, indem das eine Massstabsende vom ersten Sensor und das zweite Massstabsende vom zweiten Sensor erfasst werden. Alternativ weist der Massstab einen Positionscode aus Codeelementen auf und die Referenzlänge ist definiert durch den Abstand von Codeelementen zueinander. Dabei ist der Abstand dieser Codeelemente zueinander als Referenzlänge hinterlegt oder wird anhand der zu den Codeelementen hinterlegten Positionswerte berechnet. Der Sensorabstand wird anhand der hinterlegten Referenzlänge bestimmt, indem wenigstens ein Codeelement durch den ersten Sensor und wenigstens ein Codeelement durch den zweiten Sensor erfasst werden. Bei Vorliegen eines inkrementellen Codes werden gegebenenfalls dazwischen liegende Codeelemente ebenfalls erfasst, wozu das System weitere Sensoren aufweist, und/oder die Sensoren als Zeilen- bzw. Flächensensoren ausgebildet sind und/oder die Sensoren relativ zum Massstab bewegt werden.

Im Rahmen des Verfahrens zum hochpräzisen Bestimmen eines Sensorabstands wird optional die Temperatur des Bauteils aus einem form- und alterungsbeständigen Material bestimmt. Mittels von in der Steuer- und Auswerteeinheit hinterlegter Information über das thermische Ausdehnungsverhalten des Bauteils wird die gemessene Temperatur bei der Bestimmung des Sensorabstands berücksichtigt. Beispielsweise sind der Wert des thermischen Ausdehnungskoeffizienten des Bauteilmaterials oder die Längenausdehnung des Bauteils jeweils in Abhängigkeit der Temperatur in der Steuer- und Auswerteeinheit hinterlegt. Bei Vorliegen eines Bauteils mit einem Massstab, wird die durch die Länge des Massstabs oder den Abstand von Positionscodeelementen definierte Referenzlänge oder bei Vorliegen eines Absolutcodes die den Codeelementen zugeordneten Positionen in Abhängigkeit der gemessenen Temperatur korrigiert. Dient das Bauteil als Substrat zur Positionsfixierung der Sensoren relativ zueinander, wobei der Sensorabstand bei einer definierten Temperatur ausgemessen und, falls erforderlich zusammen mit der definierten Temperatur, in der Steuer- und Auswerteeinheit hinterlegt ist, wird der hinterlegte Sensorabstand anhand der gemessenen Temperatur korrigiert.

Die vorliegende Erfindung beinhaltet des Weiteren ein Computerprogrammprodukt oder Computer-Datensignal, verkörpert durch eine elektromagnetische Welle, mit Programmcode, zur Steuerung bzw. Durchführung des Verfahrens zum hochpräzisen Bestimmen eines Sensorabstands. Die Kontrolle und Ausführung des Verfahrens kann durch das System selbst erfolgen oder mit Hilfe von geeigneten Datenübertragungsvorrichtungen ganz oder teilweise extern, z.B. durch eine angeschlossene Rechnereinheit.

Das erfindungsgemässe System und das erfindungsgemässe Verfahren zum hochpräzisen Bestimmen eines Sensorabstands werden nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig.1: eine schematische Übersichtsdarstellung in Seitenansicht einer Messvorrichtung zur Bestimmung von Relativpositionen nach dem Stand der Technik;
- Fig.2: eine schematische Darstellung in Seitenansicht einer Ausführungsform eines erfindungsgemässen Systems mit einem einen Massstab aufweisenden Bauteil aus einem form- und alterungsbeständigen Material;
- Fig.3a,b: eine zweite Ausführungsform eines erfindungsgemässen Systems mit einem einen Massstab aufweisenden Bauteil aus einem form- und alterungsbeständigen Material, in Fig. 3a in einer Seitenansicht analog Fig. 2, in Fig. 3b entlang der Schnittlinie B-B der Fig. 3a;
- Fig.4: eine schematische Darstellung in Seitenansicht einer weiteren Ausführungsform eines erfindungsgemässen Systems mit einem einen Massstab aufweisenden Bauteil aus einem form- und alterungsbeständigen Material;
- Fig.5: eine schematische Darstellung in Seitenansicht einer Ausführungsform eines erfindungsgemässen Systems mit einem Bauteil aus einem form- und alterungsbeständigen Material, durch welches die Sensoren der Sensoreinheit in ihren Positionen fixiert sind;
- Fig.6a-c: eine schematische Darstellung in Aufsicht (Fig. 6a) und in Schnittansicht (Fig. 6b,c) einer zweiten Ausführungsform eines erfindungsgemässen Systems mit einem Bauteil aus einem form- und alterungsbeständigen Material, durch welches die Sensoren der Sensoreinheit in ihren Positionen fixiert sind;
- Fig.7: eine schematische Darstellung in Seitenansicht einer weiteren Ausführungsform eines erfindungsgemässen Systems mit einem Bauteil aus einem form- und alterungsbeständigen Material, durch welches die Sensoren der Sensoreinheit in ihren Positionen fixiert sind;
- Fig.8: eine schematische Darstellung in Seitenansicht einer weiteren Ausführungsform eines erfindungsgemässen Systems mit einem Bauteil aus einem form- und alterungsbeständigen Material, durch welches die Sensoren der Sensoreinheit in ihren Positionen fixiert sind;
- Fig.9: eine schematische Darstellung in Seitenansicht eines erfindungsgemässen Systems als Teil einer Messvorrichtung mit einem Bauteil aus einem form- und alterungsbeständigen Material und einem Thermometer zur Bestimmung der Temperatur des Bauteils; und
- Fig.10a,b: den temperaturabhängigen Verlauf des thermischen Ausdehnungskoeffizienten zweier Bauteilmaterialien.

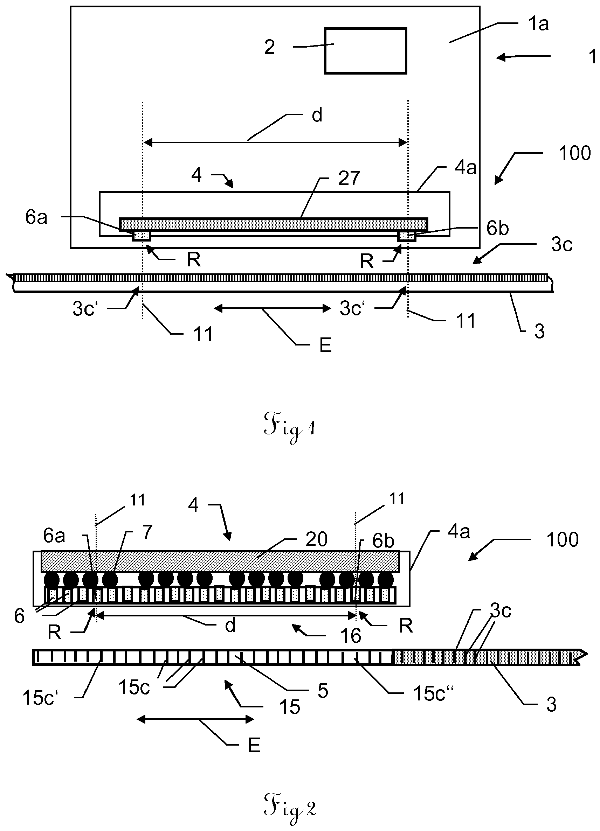

Fig.1 zeigt eine schematische Übersichtsdarstellung in Seitenansicht eines Systems 100 zur Bestimmung einer Relativposition nach dem Stand der Technik als Teil einer Messvorrichtung. Das System 100 weist einen langgestreckten Geber 3 mit Geberelementen 3c auf, beispielsweise eine Massverkörperung, welche entlang ihrer Erstreckungsrichtung (Pfeil E) eine optische Codespur mit abwechselnden hellen und dunklen Inkrementen als Geberelemente 3c aufweist. Das System 100 weist weiter eine Sensoreinheit 4 mit einem ersten Sensor 6a und einem zweiten Sensor 6b zur Erfassung von Geberelementen 3c auf, im Falle opto-elektronischer Sensoren 6a, b beispielsweise mittels Schattenwurf oder optischer Abbildung der Geberelemente 3c. Die Sensoreinheit 4 ist Bestandteil eines Lesekopfs 1, welcher weiter eine Steuer- und Auswerteeinheit 2 aufweist. Eine derartige Messvorrichtung kann Bestandteil eines 3D-Koordinatenmesseinrichtung sein, wozu die Geberelemente 3c Positionswerte codieren. Die Sensoren 6a, 6b sind an einem Substrat 27 in einem Abstand d beabstandet zueinander fixiert. Das Substrat 27 ist beispielsweise eine Halterung oder eine Leiterplatine, z.B. ein Printed Circuit Board (PCB), auf welcher die Sensoren 6a, 6b angebracht und elektrisch angeschlossen sind. Das Substrat 27 kann zudem zur Verbindung zwischen dem Gehäuse 4a der Sensoreinheit 4 und deren weiteren Komponenten (Sensoren 6a, 6b etc.) dienen. Jeder Sensor 6a bzw. 6b ist zur Erfassung wenigstens eines Geberelements 3c ausgebildet, wodurch in einem Schritt wenigstens zwei Geberelemente erfassbar sind. Die in Abhängigkeit erfasster Geberelemente 3c erzeugten elektrischen Ausgangsignale der Sensoren 6a,b werden mittels der Steuer- und Auswerteeinheit 2 ausgewertet. Geber 3 und Lesekopf 1 sind in Erstreckungsrichtung (Pfeil E) des Gebers 3 relativ zueinander beweglich. Als eine mögliche Alternative zur dargestellten Ausführungsform mit langgestrecktem Geber 3 sind in der Technik Systeme 100 bekannt, welche eine langgestreckte Sensoreinheit 4 mit einem ebenso langen Sensorarray aus einzelnen Sensoren 6 aufweisen, die einen relativ dazu beweglichen Geber 3 geringer Ausdehnung erfassen. Ein hinlänglich bekanntes Beispiel hierfür ist ein kapazitives Erfassen mittels ausgedehnter Elektrodenstrukturen (als Teil einer Sensoreinheit 4) eines geformten Dielektrikums (als Geber 3).

Für die beiden Sensoren 6a, 6b ist jeweils ein Erfassungsbezugspunkt R definiert. Die sensorinterne Lage des jeweiligen Erfassungsbezugspunkts R ist bekannt und in der Steuer- und Auswerteeinheit 2 hinterlegt. Ein solcher Erfassungsbezugspunkt R zeichnet sich dadurch aus, dass durch Erfassen eines Geberelements 3c des Gebers 3 in Bezug zu diesem Erfassungsbezugspunkt R mittels des jeweiligen Sensors 6a,b eine eindeutige Relativlage zwischen diesem Sensor 6a,b und Geberelement 3c und damit zwischen Lesekopf 1 und Geber 3 zumindest in Bezug auf die Erstreckungsrichtung (Pfeil E) ermittelbar ist. Es wird dazu entweder dasjenige Codeelement 3c' erfasst, das sich in Bezug auf die Erstreckungsrichtung (Pfeil E) ohne Versatz zum Erfassungsbezugspunkt R befindet (also auf der gestrichelten Linie 11 liegt) oder im Falle eines anderen Codeelements dessen Distanz zum Erfassungsbezugspunkt R in Erstreckungsrichtung (Pfeil E) bestimmt (also die Distanz des Codeelements zur gestrichelten Linie 11). Im Falle von opto-elektronischen Sensoren 6a,b mit einem PSD-Element (Position Sensitive Device) ist der Erfassungsbezugspunkt R vorteilhaft der definierte Nullpunkt der lichtempfindlichen Sensorfläche. Die Lage des Nullpunktes bzw. Erfassungsbezugspunkts R auf der Sensorfläche ist bekannt und in der Steuer- und Auswerteeinheit 2 hinterlegt. Eine Distanz wird vorteilhaft als Distanz des durch das Erfassen beleuchteten Pixels zum Nullpunkt bestimmt. Der Abstand der Erfassungsbezugspunkte R des ersten Sensors 6a und des zweiten Sensors 6b zueinander legt einen Erfassungsabstand fest. Der Abstand der Erfassungsbezugspunkte und damit der Erfassungsabstand ist im Wesentlichen durch den Abstand d der Sensoren 6a, 6b gegeben. Bei einer Sensoreinheit 4 nach dem Stand der Technik kann sich der Sensorabstand d unbeabsichtigt ändern. Durch wechselnde Umwelteinflüsse und/oder Alterungserscheinungen kann sich das Substrat 27 verformen. Beispielsweise kann die Wärmeentwicklung aufgrund der elektrischen Ströme in einer Leiterplatine zu einer nicht vernachlässigbaren Ausdehnung der Leiterplatine führen. Durch die Formveränderung ändert sich auch der Abstand d der an der Leiterplatine befestigten Sensoren 6a, 6b und damit der Erfassungsabstand, was sich nachteilig in Messsituationen auswirkt.

In den Figuren 2 bis 9 sind Ausführungsformen eines erfindungsgemässen Systems 100 zur Bestimmung einer Relativposition dargestellt, welche jeweils ein Bauteil 5 zur hochpräzisen Bestimmung des Sensorabstands d aus einem form- und alterungsbeständigen Material mit einem thermischen Ausdehnungskoeffizienten mit einem Betrag in einem Bereich von 0 bis höchstens 5·10⁻⁶ *K*⁻¹ aufweisen. Hierfür geeignete sogenannte Ultra-Low-Thermal-Expansion-Materials (ULE) mit thermischen Ausdehnungskoeffizienten in einem Bereich von 0±2,5·10⁻⁷ *K*⁻¹ bis 0±5·10⁻⁶ *K*⁻¹ sind z.B. Zerodur®, Nexcera (Naught Expansion CERAmic) oder Ultrahigh-purity INVAR 36. Die hochpräzise Bestimmung des Sensorabstands d wird mittels des Bauteils 5 dadurch erreicht, dass es einen Massstab aufweist, welcher eine Referenzlänge definiert und/oder dadurch, dass das Bauteil 5 als Substrat dient und der erste und zweite Sensor 6a, 6b bzw. beliebig weitere Sensoren 6c durch das Bauteil 5 in ihren Positionen zueinander fixiert sind, was im Weiteren durch den Begriff "positionsfixiert" ausgedrückt wird. Da das Bauteil 5 keinerlei Verformung, vor allem in Erstreckungsrichtung (Pfeil E), durch Temperatureinflüsse und/oder Alterung erfährt, sind so auch die Positionen der Sensoren 6a-c zueinander unveränderlich definiert. Das Bauteil 5 dient in manchen Ausführungsformen zudem zur mechanischen Verbindung der Sensoren 6a, 6b bzw. 6c mit dem Gehäuse 4a der Sensoreinheit 4. Das Bestimmen des Sensorabstands d anhand des Bauteils 5 erfolgt dabei in einigen Ausführungsformen simultan zum Bestimmen einer Relativposition anhand des Gebers 3. Der Geber 3 weist vorzugsweise optisch erfassbare Geberelemente 3c auf oder ist zur Erfassung der Geberelemente 3c nach dem kapazitiven, magnetischen, induktiven oder einem sonstigen physikalischen Wirkungsprinzip ausgebildet.

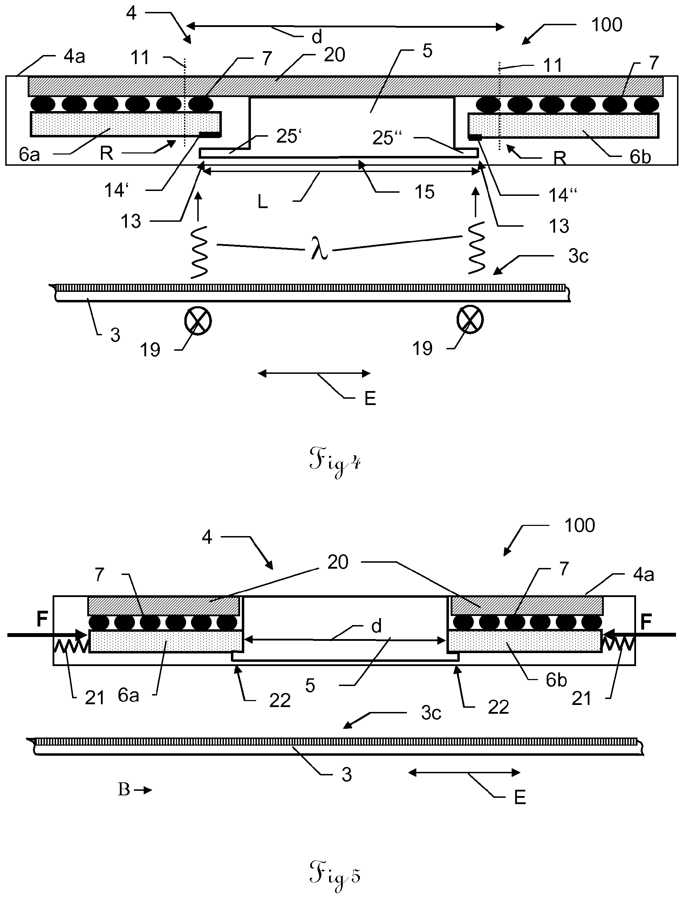

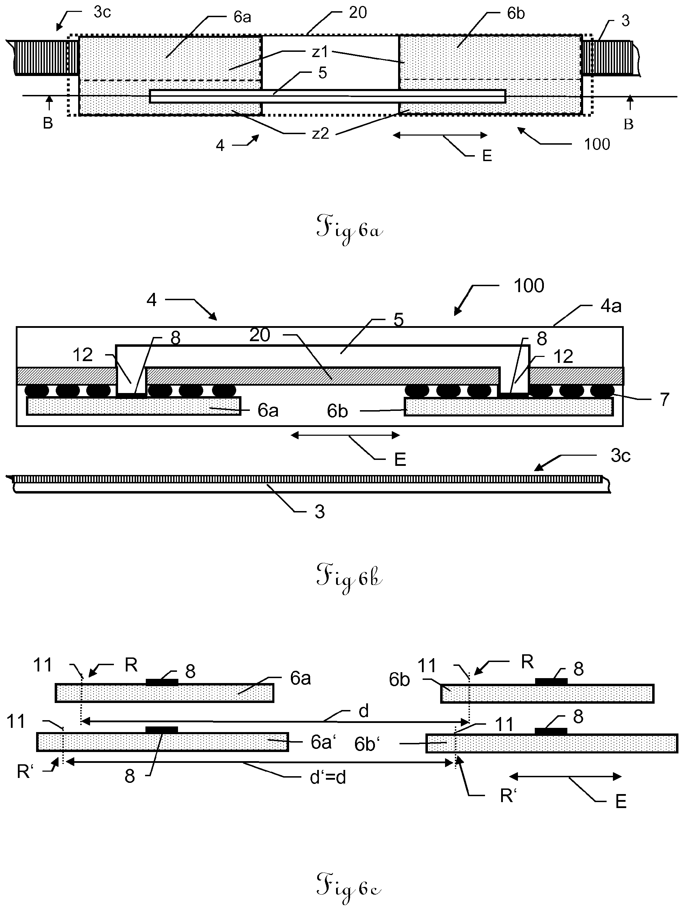

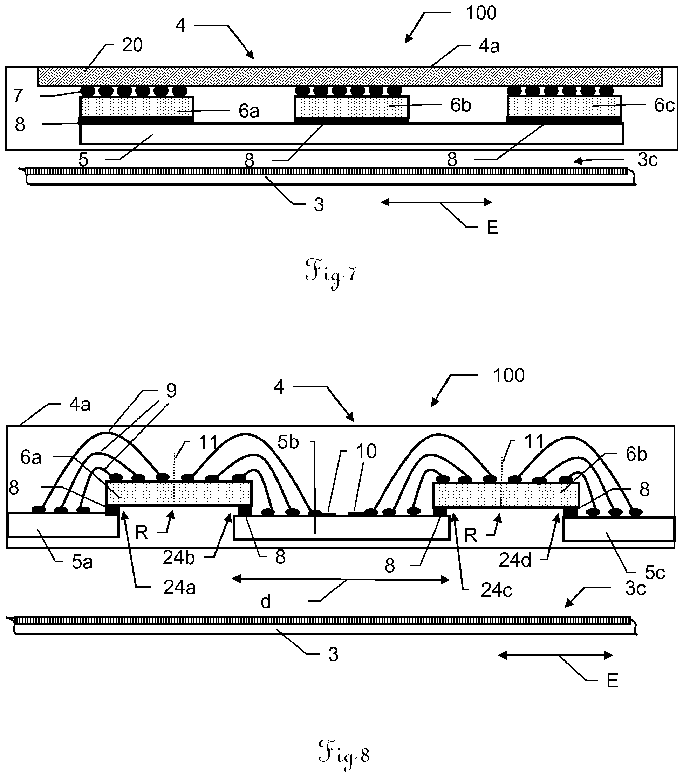

Die erfindungsgemässen Ausführungsformen weisen mindestens ein form- und alterungsbeständiges Bauteil 5, 5a-c mit den oben beschriebenen Eigenschaften auf und eine Leiterplatine zum elektrischen Anschliessen der Sensoren 6a-c. Die Leiterplatine in den Beispielen 1-7 ist ein PCB 20. In der Ausführungsform nach Fig. 8 werden die Funktionen der Leiterplatine von den Bauteilen 5a-c aus einem form- und alterungsbeständigen Material erfüllt, welche dazu elektrische Leiterbahnen sowie elektrische und mechanische Verbindungen mit den Sensoren 6a,b,c aufweisen. Das Halten bzw. Tragen der Sensoren 6a-c erfolgt in den Ausführungsformen nach Fig. 1-4 und Fig. 7 durch das PCB 20, in den Ausführungsformen nach Fig. 5 und Fig. 6a-c durch das PCB 20 und das Bauteil 5, in der Ausführungsform nach Fig. 8 allein durch das Bauteil 5. Die Verbindung zwischen Sensor 6a-c und PCB 20 erfolgt vorzugsweise über Ball Grid Arrays (BGA) 7.

Die Figuren 2 bis 4 zeigen Ausführungsformen eines erfindungsgemässen Systems 100, welches zur Bestimmung des Sensorabstands d ein Bauteil 5 mit den oben spezifizierten Eigenschaften und mit einem Massstab 15 aufweisen. Der Massstab 15 definiert eine Referenzlänge zur Bestimmung des Sensorabstands d. Dazu wird der Massstab vor Einbau des Bauteils 5 hochpräzise vermessen, so dass die Referenzlänge einen relativen Fehler von höchstens 5·10⁻⁶, in besonderen Ausführungsformen für noch präzisere Messzwecke von höchstens 1·10⁻⁶, für äusserst präzise Anwendungen von höchstens 5·10⁻⁷, aufweist.

Die Ausführungsform nach Fig. 2 weist anschliessend an ein Ende des Gebers 3 erfindungsgemäss das Bauteil 5 mit dem Massstab 15 auf. Der Massstab 15 weist einen Positionscode aus Codeelementen 15c auf, welche von der Sensoreinheit 4 nach dem gleichen physikalischen Wirkprinzip wie die Geberelemente 3c erfassbar sind. Bei Vorliegen einer opto-elektronischen Sensoreinheit 4 erfolgt also beispielsweise ein Erfassen der Codeelemente 15c mittels Schattenwurf oder optischer Abbildung, wobei optional ein Grössenverhältnis der Abbildung der Codeelemente 15c bzw. der Geberelemente 3c und/oder eine möglicherweise aufgetretene Veränderung des Abbildungsgrössenverhältnisses durch Variation des Abstandes senkrecht zur Erstreckungsrichtung (Pfeil E) der Sensoren zum Geber 3 bzw. Bauteil 5 ermittelt wird. Die Sensoreinheit 4 weist einen linearen Array 16 mit einer Vielzahl einzelner Sensoren 6 auf, beispielsweise ein CMOS-Array oder ein CCD-Array mit je 1024x1 Pixel. Die Position eines jeden Sensors 6 innerhalb des Arrays 16 ist bekannt und in der Steuer- und Auswerteeinheit 2 hinterlegt. Zwei der Sensoren 6 des Arrays 16 dienen als Bezugspunktsensoren 6a, 6b, wobei durch die Position des ersten Sensors 6a und durch die Position des zweiten Sensors 6b je ein Erfassungsbezugspunkt R und damit der Erfassungs- und Sensorabstand d festgelegt ist. Welche Sensoren des Arrays 16 als erster bzw. zweiter Sensor 6a, 6b herangezogen werden, ist herstellerseitig und/oder durch den Benutzer durch Konfiguration über die Steuer- und Auswerteeinheit 2 festgelegt. Das Bauteil 5 aus einem form- und alterungsbeständigen Material entspricht aufgrund seiner Anordnung am Geberende einer Verlängerung des Gebers 3. Die Länge des Bauteils 5 entspricht in Erstreckungsrichtung wenigstens dem Sensorabstand d, wobei eine etwas grössere Länge, welche eine zu erwartende Vergrösserung des Sensorabstands d aufgrund von Wärmeeinwirkung berücksichtigt, von Vorteil ist. Eine im Vergleich zum Sensorabstand d wesentlich grössere Länge des Bauteils 5 und damit des Massstabs 15 wird in alternativen Ausführungsformen zur Erhöhung der Genauigkeit der Bestimmung des Sensorabstands d verwendet. Statt an einem Ende des Gebers 3 kann das Bauteil 5 zwischen zwei Teilstücken des Gebers 3 angeordnet sein. Der Geber 3 ist aus Kostengründen aus einem weniger form- und alterungsbeständigen Material als das Bauteil 5 gefertigt. Auch kann die Anordnung der Geberelemente 3c von der der Codeelemente 15c abweichen, z.B. hinsichtlich Anordnungsdichte, Ausrichtung oder Muster, das die Codeelemente 15c bilden. Die Positionswerte der Codeelemente 15c sind präzise bestimmt und in der Steuer- und Auswerteeinheit 2 hinterlegt, wodurch der Abstand zweier Codeelemente 15c ermittelbar ist. Die Bestimmung des Sensorabstands d erfolgt anhand des Massstabs 15, wozu die Sensoreinheit 4 gegenüber dem Bauteil 5 positioniert wird, beispielsweise durch Verfahren des Lesekopfs 1. Anschliessend wird wenigstens ein Codeelement 15c vom ersten Sensor 6a und ein weiteres Codeelement 15c vom zweiten Sensor 6b erfasst und der Abstand der beiden Codeelemente 15c' und 15c " als Referenzlänge herangezogen. Bei Vorliegen eines Absolutcodes wird dazu die Differenz aus den beiden Positionen gebildet, die den beiden Codeelementen 15c' und 15c " anhand der in der Steuer- und Auswerteeinheit 2 hinterlegten zugeordnet sind. Bei Vorliegen eines Inkrementalcodes aus gleich beabstandeten Codeelementen 15c werden neben den beiden Codeelementen 15c' und 15c " alle Codeelemente 15c dazwischen erfasst und die Summe aus der entsprechenden Anzahl von Codeelementabständen gebildet, wobei der Abstand der Codeelemente 15c als Referenzlänge in der Steuer- und Auswerteeinheit 2 hinterlegt ist. Da in der vorliegenden Ausführungsform das Bauteil 5 geberseitig angeordnet und damit leicht zugänglich ist, kann ein Vermessen des Massstabs 15 zur Definition der Referenzlänge statt vor dem Einbau des Bauteils 5 auch nach Montage des Systems 100 beim Kunden erfolgen.

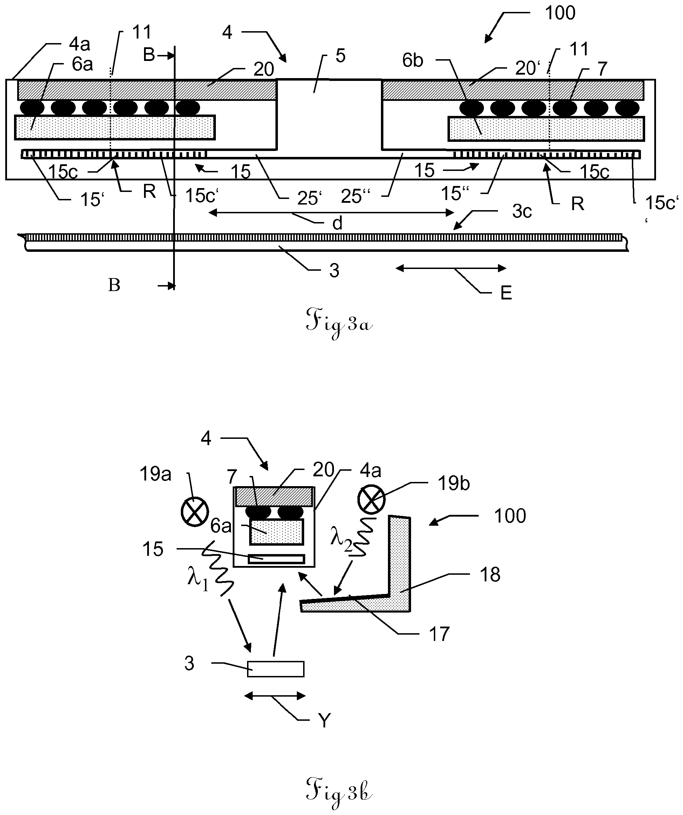

In der Ausführungsform des erfindungsgemässen Systems 100 nach den Figuren 3a und 3b weist das System 100 ein Bauteil 5 auf, welches wiederum aus dem form- und alterungsbeständigen Material gefertigt ist und einen Massstab 15 mit einem Positionscode aus Codeelementen 15c aufweist. Das Bauteil ist im Gegensatz zur vorherigen Ausführungsform an der Sensoreinheit 4 angeordnet. Das Bauteil 5 ist wie die PCBs 20 und 20' am Gehäuse 4a der Sensoreinheit befestigt und ausgebildet als ein Formstück mit einem quaderförmigen Grundkörper mit einem ersten Ausleger 25' mit einem ersten Teil 15' des Massstabs 15 und einem zweiten Ausleger 25" mit einem zweiten Teil 15" des Massstabs 15. Der erste Teil 15' des Massstabs 15 liegt vollständig im Erfassungsbereich des Linearsensors 6a und der zweite Teil 15" des Massstabs 15 vollständig im Erfassungsbereich des Linearsensors 6b. Alternativ zur dargestellten Ausführungsform kann das Bauteil nur einen Ausleger mit Positionscode aufweisen, der sich in Erstreckungsrichtung (Pfeil E) vom Anfang des ersten Sensors zum Ende des zweiten Sensors erstreckt, so dass ein Teil des Massstabs 15 im Erfassungsbereich des Sensors 6a und ein Teil des Massstabs 15 im Erfassungsbereich des Sensors 6b liegt. Die Sensoren 6a,b sind an den PCBs 20 befestigt, die Teile 15', 15" des Massstabs 15 sind zwischen Geber 3 und Sensoren 6a,b angeordnet. Das Bestimmen des Sensorabstands d erfolgt analog zur Vorgehensweise nach Fig. 2: jeweils wenigstens ein Codeelement 15c' wird vom ersten Sensor 6a und wenigstens ein Codeelement 15c " wird vom zweiten Sensor 6b erfasst, jeweils in Bezug zum Erfassungsbezugspunkt R. Im vorliegenden Fall wird zur Herstellung des Bezugs zum Erfassungsbezugspunkt R jeweils die Distanz in Erstreckungsrichtung (Pfeil E) des Codeelements 15c' bzw. 15c " zum jeweiligen Erfassungsbezugspunkt R bestimmt, da die beiden beliebig gewählten Codeelemente 15c' und 15c " sich in Erstreckungsrichtung (Pfeil E) nicht auf einer Linie 11 zum jeweiligen Erfassungsbezugspunkt R befinden, sondern versetzt dazu. Die Erfassungsbezugspunkte R befinden sich im Beispiel in der Mitte der Sensoren 6a,b, ihre Positionen sind jedoch im Allgemeinen beliebig wählbar. Der anhand der in der Steuer- und Auswerteeinheit 2 hinterlegten Information ermittelte Abstand der beiden erfassten Codeelemente 15c' und 15c " dient als Referenzlänge zur Bestimmung des Sensorabstands d, wobei im vorliegenden Fall bei der Bestimmung des Erfassungsabstand die Distanz der Codeelemente 15c' bzw. 15c " zu den Erfassungsbezugspunkten R berücksichtigt wird. Um bei Vorliegen eines inkrementellen Codes in allen Situation eine Bestimmung des Sensorabstands d zu ermöglichen, ist bei der dargestellten Aufteilung des Massstabs 15 in zwei Teile 15' und 15" darauf zu achten, dass zwei ausgezeichnete Codeelemente 15c, die bekannten Abstand zueinander aufweisen, jeweils von einem Sensor 6a und 6b erfassbar sind. Solche ausgezeichneten Codeelemente 15c sind beispielsweise die jeweils äussersten Codeelemente oder durch von den übrigen Codeelementen 15c abweichende Strichdicke unterschiedene Codeelemente.

In der vorliegenden Ausführungsform ist der Geber 3 mit den Geberelementen 3c von den Sensoren 6a,b aus betrachtet hinter dem Massstab 15 angeordnet. Um dennoch ein Erfassen von Geberelementen 3c durch die Sensoren 6a,b zu ermöglichen, ist das Bauteil 5 bzw. der Bereich des Massstabs 15 dergestalt, dass es ein Erfassen der Geberelemente 3c erlaubt. Z.B. ist im Falle kapazitiver Sensoren 6a,b das Bauteil 5 aus einem Material, welches durchlässig für die elektrischen Felder der Geberelemente 3c ist, im Falle optischer Sensoren 6a,b entsprechend durchlässig für das Licht, mit dem die Geberelemente 3c beleuchtet werden.

Zur Unterscheidung, ob ein erfasstes Messsignal einem Codeelement 15c oder einem Geberelement 3c zuzuordnen ist, erfolgt ein Erfassen anhand unterscheidbarer Merkmale. Dies ist z.B. durch eine unterschiedliche Anordnung von Codeelementen 3c und Geberelementen 15c erreichbar, z.B. hinsichtlich Anordnungsdichte, Ausrichtung oder Muster, das die Codeelemente 15c bilden. Alternativ kann die erfassbare Stärke der physikalischen Wirkgrösse der Codeelemente 15c deutlich von derjenigen der Geberelemente 3c abweichen, im optischen Fall also indem gleiches Licht durch unterschiedliche starke Transmissivität oder Reflexivität von Geberelementen 3c und Codeelementen 15c unterschiedlich moduliert wird. Eine Unterscheidung ist alternativ mittels Licht unterschiedlicher Wellenlänge erreichbar, wie dies in Fig. 3b dargestellt ist.

Fig. 3b zeigt eine Anordnung für eine Ausführungsform nach Fig. 3a, bei der das Erfassen von Geberelementen und Codeelementen jeweils opto-elektronisch, aber unter Verwendung von Licht unterschiedlicher Wellenlänge erfolgt. Gezeigt ist ein Schnitt rechtwinklig zur Erstreckungsrichtung (Pfeil E) der Sensoreinheit 4 bzw. des Gebers 3 aus Fig. 3a, entlang einer Schnittlinie B-B. Das Erfassen von Geberelementen 3c erfolgt durch Beleuchten des Gebers 3 mit Licht einer ersten Wellenlänge λ₁, wozu beispielsweise eine Beleuchtungseinheit 19a bei der Sensoreinheit 4 in der Figur 3b links angeordnet ist. Das Licht λ₁ wird vom Geber reflektiert, durchstrahlt das Bauteil 5 und wird vom Sensor 6a der Sensoreinheit 4 detektiert. Das Erfassen von Codeelementen 15c erfolgt nach dem Schattenwurfprinzip oder alternativ unter Verwendung einer (nicht dargestellten) Abbildungsoptik mittels Durchleuchten des Massstabs 15 mit Licht einer zweiten, von der ersten Wellenlänge λ₁ unterscheidbaren, Wellenlänge λ₂, wozu eine Beleuchtungseinheit 19b beispielsweise bei der Sensoreinheit 4 in der Figur rechts angeordnet ist. Um das Licht der Beleuchtungseinheit 19b von unten auf den Massstab 15 zu lenken, weist das System 100 eine optische Einheit 17/18 aus einem L-förmigen Spiegelträger (Bügel) 18 mit einem Spiegel 17 auf. Die optische Einheit 17/18 und die Beleuchtungseinheiten 19a, 19b sind zusammen mit der Sensoreinheit 4 relativ zum Geber 3 bewegbar. Das Bauteil 5 mit dem Massstab 15 ist derart gestaltet, dass es Licht mit der ersten Wellenlänge λ₁ idealerweise nicht beeinflusst, also transparent für Licht mit der ersten Wellenlänge λ₁ ist, die Codeelemente 15c Licht mit der zweiten Wellenlänge λ₂ jedoch modulieren, indem die Codeelemente 15c oder umgekehrt der Rest des Massstabs 15 opak für Licht mit der zweiten Wellenlänge λ₂ sind. Hierfür liegen die erste Wellenlänge λ₁ und die zweite Wellenlänge λ₂ beispielsweise in unterschiedlichen spektralen Bereichen, z.B. die erste Wellenlänge λ₁ im sichtbaren Bereich und die zweite Wellenlänge λ₂ im UV-Bereich oder jeweils eine Wellenlänge im sichtbaren und die andere im IR-Bereich. Alternativ liegen beide Wellenlängen λ₁ und λ₂ im gleichen Spektralbereich, entsprechen jedoch unterscheidbaren Farben. Sind alternativ zur dargestellten Anordnung die Beleuchtungseinheiten 19a und 19b von der Sensoreinheit 4 aus gesehen hinter dem Geber 3 angeordnet, wobei das Erfassen von Geberelementen 3c mittels Durchleuchten erfolgt, so kann auf die optische Einheit aus einem Spiegelträger 17/18 verzichtet werden. Eine solche Anordnung ist vorteilhaft bei Ausführungsformen mit statischer Sensoreinheit 4 und beweglichem Geber 3, wobei die Beleuchtungseinheiten 19a und 19b zusammen mit der Sensoreinheit 4 relativ zum Geber 3 bewegt werden. Der Geber 3 bzw. die Geberelemente 3c sind dann dergestalt ausgebildet, dass sie Licht der zweiten Wellenlänge λ₂ idealerweise nicht beeinflussen, Licht der ersten Wellenlänge λ₁ jedoch modulieren. Alternativ kann bei Ausbildung der Sensoren 6a,b als Flächensensoren ein vom Bauteil 5 ungestörtes Erfassen von Geberelementen 3c über eine spezielle Formgebung des Bauteils 5 erreicht werden. Hierzu ist das Bauteil 5 bzw. sind die Ausleger 25' und 25" so schmal geformt, dass die Ausleger 25' und 25" in zur Erstreckungsrichtung orthogonaler Richtung (Pfeil Y) nur einen Teilbereich der Sensorflächen abdecken. Der Geber 3 ist dabei entweder breiter als die Ausleger 25' und 25" oder in dieser orthogonalen Richtung (Pfeil Y) versetzt zu diesen angeordnet, so dass die Geberelemente 3c durch die Sensoren 6a,b am Bauteil 5 vorbei erfassbar sind.

Die Ausführungsform nach Fig.4 entspricht derjenigen nach Fig. 3, nur ist das Bauteil 5 im Vergleich zur Ausführungsform nach Fig. 3a abgewandelt, indem die beiden Ausleger 25' und 25" in Erstreckungsrichtung (Pfeil E) so kurz sind, dass sie nur einen kleinen Teil des Erfassungsbereichs der Sensoren 6a, 6b abdecken (Flächen 14' und 14"). Dementsprechend sind mit dem Grossteil des Erfassungsbereichs der Sensoren 6a,b die Geberelemente 3c ungestört erfassbar, unabhängig davon, ob es sich bei den Sensoren 6a,b um Flächensensoren handelt oder nicht. Als Referenzlänge zur Bestimmung des Sensorabstands d dient in der vorliegenden Ausführungsform die ganze Länge L des Massstabs 15 in Erstreckungsrichtung (Pfeil E), mit anderen Worten der Abstand der Massstabsenden 13 zueinander, so dass ein Positionscode unnötig ist. Hierzu ist die Länge L des Massstabs 15 durch herstellerseitiges Vermessen präzise bekannt und in der Steuer- und Auswerteeinheit 2 hinterlegt. Ein jeweiliges einem Sensor 6a, 6b zugewandtes Massstabsende 13 ist von diesem Sensor 6a,b in Bezug zum jeweiligen Erfassungsbezugspunkt R erfassbar, indem die Position der Projektionsfläche bzw. der Projektionslinie 14' bzw. 14" des Masstabsendes relativ zum jeweiligen Erfassungsbezugspunkt R bestimmt wird, wodurch anhand der hinterlegten Referenzlänge L der Sensorabstand bestimmbar ist. Im Fall einer opto-elektronischen Sensoreinheit 4 kann ein Erfassen der Massstabsenden und von Geberelementen 3c mit gleichen Licht λ erfolgen. Hierzu sind Beleuchtungseinheiten 19 beispielsweise von den Sensoren 6a,b aus gesehen hinter dem Geber 3 angeordnet. Alternativ kann eine Anordnung wie in Fig. 3b dargestellt mit Beleuchten des Gebers 3 und des Spiegelträgers 17/18, insbesondere mit Licht je unterschiedlicher Wellenlänge, verwendet werden. Ein Erfassen von Geberelementen 3c erfolgt mittels Durchleuchten. Der Massstab 15 ist in der dargestellten Anordnung für das Licht λ der Beleuchtungseinheiten 19 zumindest weitgehend opak oder weist Markierungen an den Massstabsenden 13 auf, die das Licht λ modulieren, weswegen die Position eines Massstabsendes 13 als Position der dunklen Fläche 14' bzw. 14" - welche eine Projektion eines Teils des Massstabs 15 darstellen - auf dem jeweiligen Sensor 6a,b detektiert wird. Die Position der Flächen 14' bzw. 14" ist anhand der Position des Hell-Dunkel-Grenzlinie auf dem Sensor 6a bzw. 6b bestimmbar oder anhand der Position eines Schwerpunkts der gesamten Fläche 14' bzw. 14" auf dem Sensor 6a bzw. 6b. Anhand der beiden detektierten Positionen der Massstabsenden 13 im Sensorfeld der beiden Sensoren 6a,b und damit von deren Distanzen zum jeweiligen Erfassungsbezugspunkt R, welche der Distanz in Erstreckungsrichtung (Pfeil E) zur gestrichelten Linie 11 entspricht, und anhand der hinterlegten Massstabslänge L wird der aktuelle Sensorabstand bzw. der Abstand der Erfassungsbezugspunkte R zueinander bestimmt. In einigen Ausführungsformen weisen die Aufleger 25' und 25" zur weiteren Erhöhung der Präzision der Sensordistanzbestimmung zusätzliche lichtdurchlässige Schlitze auf, wodurch zusätzliche Kantenübergänge im Bereich der Flächen 14' bzw. 14" auftreten, welche ebenfalls zur Bestimmung der Sensordistanz d herangezogen werden.

Sind die Sensoren 6a,b als Linearsenoren oder Flächensensoren mit einer Ausdehnung von 5mm bis 10mm in Erstreckungsrichtung ausgebildet so liegt der Abstand d der Sensoren 6a,b zueinander beispielsweise im Bereich von 10mm bis 30mm, vorzugsweise bei 20mm ± 2mm. Die genaue Distanz der Sensoren zueinander, also der Sensorabstand d wird mittels des Bauteils 5 festgelegt bzw. bestimmt. Das Ausmessen des Bauteils 5 bzw. des Bauteils 5 und/oder des Sensorabstands d erfolgt entweder vor dem Einbau des Bauteils 5, der Sensoren 6a,b bzw. des Bauteils 5 mit den daran fixierten Sensoren 6a,b oder aber vor Ort beim Benutzer, wobei unter Ausmessen des Bauteils 5 auch das Ausmessen seines Massstabs 15 bzw. seiner Referenzlänge verstanden wird. Das Ausmessen erfolgt hochpräzise, d.h. mit einem Fehler mit einem Betrag von höchstens 5·10⁻⁶. Hierfür können bekannte Verfahren eingesetzt werden, wie beispielsweise das Ausmessen mittels Interferometer. Der bzw. die gemessenen Werte werden in der Steuer- und Auswerteeinheit 2 des Systems 100 hinterlegt.

In den Ausführungsformen eines erfindungsgemässen Systems 100 zur Bestimmung von Relativpositionen nach den Figuren 5 bis 8 dient das Bauteil 5 aus einem form- und alterungsbeständigen Material mit einem thermischen Ausdehnungskoeffizienten mit einem Betrag in einem Bereich von 0 bis höchstens 5·10⁻⁶ *K*⁻¹ jeweils als Substrat, durch das die Sensoren 6a-c positionsfixiert sind. Für höhere Präzisionsansprüche wird vorteilhaft auch Material mit einem geringeren thermischen Ausdehnungskoeffizienten, wie beispielsweise mit einem thermischen Ausdehnungskoeffizienten mit einem Betrag von 1·10⁻⁶ *K*⁻¹, oder noch besser von 3·10⁻⁷ *K*⁻¹ verwendet. Das Substrat ist also dergestalt, dass sich seine Form im Gegensatz zu Substraten 27 nach dem Stand der Technik im Lauf der Zeit und/oder durch Umwelteinflüsse wie beispielsweise Wärmeeinwirkung nicht oder nur geringfügig ändert. Durch diese Eigenschaften des Materials, aus dem das Bauteil 5 und damit das Substrat einer erfindungsgemässen Sensoreinheit sind, und die Fixierung der Position der Sensoren 6a-c mittels des Substrats 5 ändert sich der Abstand d der Sensoren 6a-c weder altersbedingt noch durch Umwelteinflüsse wie beispielsweise Wärmeeinwirkung. Der Sensorabstand d ist dadurch hochpräzise bestimmt mit einem relativen Fehler im Bereich von höchstens 5·10⁻⁶, für noch präzisere Messzwecke von höchstens 1·10⁻⁶, für äusserst präzise Anwendungen von höchstens 6·10⁻⁷. Weisen die Sensoreinheiten 4 PCBs 20 auf, durch welche die Sensoren 6a-c elektrisch kontaktiert und getragen sind, ist die Verbindung zwischen einem Sensor 6a-c und einem PCB 20 optional dergestalt flexibel ausgeführt, dass ein geringes Verschieben eines Sensors 6a-c relativ zum PCB 20 möglich ist, um mechanische Spannungen aufgrund von thermisch induzierter Längenausdehnung zu vermeiden oder zu verringern. Dazu erfolgt eine Verbindung über vergleichsweise weiche Lötkontakte (in den Beispielen über die Ball-Grid-Arrays (BGAs) 7). Dies ist insbesondere dann vorteilhaft, wenn Sensor 6a-c und PCB 20 aus Materialien mit wesentlich unterschiedlichen thermischen Ausdehnungskoeffizienten gefertigt sind, wodurch bei Verwendung einer starren Befestigung anstelle einer flexiblen Verbindung bei Wärmeeinfluss erhebliche mechanische Spannungen am Sensor 6a-c bzw. PCB 20 auftreten würden. Alternativ sind Sensoren 6a-c und PCB 20 dergestalt starr ausgebildet, dass diese mechanische Spannungen aufnehmen können ohne die Systemleistung zu beeinträchtigen.

Fig. 5 zeigt eine seitliche Ansicht eines erfindungsgemässen Systems 100 mit Geber 3, Sensoreinheit 4 mit zwei Sensoren 6a,b, die mittels BGAs 7 am PCB 20 befestigt sind, und einem Bauteil 5, welches am Gehäuse 4a der Sensoreinheit 4 angebracht ist. Die Sensoren 6a,b sind seitlich auf Anschlag an dem als positionsfixierendes Substrat dienenden Bauteil 5 in ihrem Abstand zueinander fixiert. Hierzu sind sie jeweils mit einer Kraft F in Richtung des Bauteils 5 beaufschlagt, so dass sie mit ihrer einander zugewandten Seite jeweils gegen das Substrat gedrückt werden. Die Beaufschlagung kann mittels eines Federelements 21 erfolgen, das zwischen Sensor 6a,b und Gehäuse 4a der Sensoreinheit 4 angeordnet ist oder mittels einer Spannvorrichtung, die am einen Ende am Bauteil 5 befestigt ist und den jeweiligen Sensor 6a,b umgreifend diesen an das Bauteil 5 drückt. Alternativ können die Sensoren 6a,b mittels Bonden seitlich am Bauteil 5 befestigt werden. Die Sensoren 6a,b werden im Wesentlichen von dem PCB 20 gehalten. Zur besseren Stabilität kann das Bauteil 5 jedoch wie dargestellt als Quader mit Auflagekanten 22 an den Anschlagstellen ausgebildet sein. Weist das Bauteil 5 Auflagekanten 22 auf, können diese in einer alternativen Ausführungsform ähnlich der Ausführungsform nach Fig. 4 zusätzlich zur Bestimmung des Sensorabstands d mittels einer Messung anhand eines Massstabs 15 (nicht in Fig.5 dargestellt) dienen, indem die Auflagekanten 22 von den Sensoren 6a,b erfasst werden und der Abstand der äusseren Enden der Auflagekanten 22, welcher in der Steuer- und Auswerteeinheit 2 hinterlegt ist, als Referenzlänge dient. Alternativ zur dargestellten Ausführungsform, bei der das Bauteil 5 und die PCBs 20 nicht direkt verbunden sind, kann das Substrat 5 auch an den PCBs 20 angebracht sein.

Die Figuren 6a und 6b zeigen eine zweite Ausführungsform eines erfindungsgemässen Systems 100 mit einem als Substrat dienenden Bauteil 5.

Fig. 6a zeigt in einer Aufsicht die Sensoreinheit 4 und den darunter liegenden, von der Sensoreinheit 4 teilweise verdeckten, Geber 3. Die Sensoreinheit 4 weist ein PCB 20 auf, welches durch eine gestrichelte Linie nur angedeutet ist, zwei Sensoren 6a,b und das längliche Bauteil 5. Die Sensoren 6a,b sind jeweils aus einem zusammenhängenden Materialstück gefertigt, welches in eine erste Zone z1 und eine zweite Zone z2 separiert ist. Die erste Zone z1 ist der eigentliche Sensor in dem Sinne, dass er zur Erfassung von Geberelementen 3c ausgebildet ist. Die zweite Zone z2 ist nicht sensitiv, sondern dient als Befestigungsfläche zur Befestigung am Bauteil 5, wodurch die beiden Sensoren 6a, 6b beabstandet zueinander positionsfixiert sind.

In Fig. 6b ist das System 100 nach Fig. 6a in Seitenansicht entlang einer Schnittlinie B-B der Fig. 6a dargestellt. Es ist ersichtlich, dass das Bauteil 5 als eine Art Brücke mit zwei Pfeilern 12 geformt ist, so dass es mittels der Pfeiler 12 durch das PCB 20 hindurch, wobei das PCB 20 optional an dieser Stelle unterbrochen ist, an den Sensoren 6a,b ansetzt. Eine Befestigung der Sensoren 6a,b an den Pfeilern 12 erfolgt vorzugsweise mittels Bonden, wobei in alternativen Ausführungsformen eine Befestigung mittels anderer Prozesse wie Kleben oder Löten erfolgt. Im Beispiel sind die Bondstellen 8 im Vergleich zur Sensorfläche klein, so dass die Befestigung quasi punktuell ist. Dies bietet den Vorteil, dass bei Wärmeeinwirkung mechanische Spannungen aufgrund thermischer Ausdehnung der am thermisch stabilen Bauteil 5 befestigten Sensoren 6a,b weitgehend vermieden werden.

Fig. 6c zeigt einen Teilbereich des Systems 100 nach den Figuren 6a und 6b, in dem nur die Sensoren 6a,b mit ihren Erfassungsbezugspunkten R und die Bondstellen 8 dargestellt sind. Die langgestreckten Sensoren 6a,b sind wie beschrieben an den Bondstellen 8 positionsfixiert zueinander. Bei derartigen länglich oder flächig ausgedehnten Sensoren 6a,b können diese sich selbst noch beispielsweise durch Wärmeausdehnung verformen, wodurch sie sich z.B. entlang der Erstreckungsrichtung (Pfeil E) ausdehnen. Dies ist durch die beiden Sensoren 6a',b' im Vergleich zu den unausgedehnten Sensoren 6a,b dargestellt. Sind, wie aus Fig. 6c ersichtlich, die Erfassungsbezugspunkte R der Sensoren 6a,b in gleicher Richtung gleichweit von der Bondstelle 8 entfernt und ist das Ausmass der Ausdehnung bei beiden Sensoren 6a,b gleich (wozu vorteilhaft die Sensoren 6a,b baugleich sind), dann beeinflusst dies den Erfassungsabstand nicht, da sich die Positionen der Erfassungsbezugspunkte R jeweils betrags- und richtungsgleich ändern (neue Position im ausgedehnten Zustand der Sensoren 6a',b' angedeutet durch die Erfassungsbezugspunkt R' in Fig. 6c unten). Der Erfassungsabstand, der im Beispiel dem Sensorabstand d genau entspricht, bleibt also konstant (neuer Sensorabstand d' gleich altem Sensorabstand d, jeweils dargestellt als Distanz zwischen den gestrichelten Linien 11). Ein konstanter Sensorabstand d kann alternativ erreicht werden, indem die Bondstelle 8 jeweils so gewählt wird, dass der Erfassungsbezugspunkt R jeweils im Bereich der Bondstelle 8 liegt und sich somit auch bei Verformung eines Sensors 6a,b nicht verschiebt.

Fig. 7 zeigt eine weitere Ausführungsform eines erfindungsgemässen Systems 100 in Seitenansicht mit einer drei Sensoren 6a-c aufweisenden Sensoreinheit 4. Um die Sensoren 6a-c in ihren Positionen in definiertem Abstand zueinander zu fixieren, sind sie mit ihrer geberzugewandten Seite auf dem als Substrat dienenden Bauteil 5 mittels Bonden befestigt. Dem Bauteil 5 kommt in dieser Ausführungsform keine tragende Funktion zu, sondern es dient ausschliesslich zur Positionsfixierung der Sensoren 6a-c entlang der Erstreckungsrichtung (Pfeil E). Eine Bondstelle 8 kann z.B. durch anodisches Bonden oder Wafer-Bonden hergestellt sein. Analog zur Ausführungsform nach den Figuren 3a,b sind das Bauteil 5 und die Bondstelle 8 dergestalt, dass sie ein Erfassen von Geberelementen 3c erlauben. Mit anderen Worten sind Bauteil 5 und Bondstelle 8 zumindest weitgehend durchlässig für die physikalische Wirkgrösse zur Erfassung der Geberelemente 3c. Für ein opto-elektronisches Erfassen ist die Bondstelle 8 dazu mittels anodischem Bonden hergestellt. Alternativ können die Sensoren 6a-c, analog zu den Sensoren 6a,b nach der vorherigen Ausführungsform der Figuren 6a, 6b und 6c in eine erste Zone z1 zur Erfassung der Geberelemente 3c und eine zweite Zone z2 zum Bonden an Bauteil 5 aufgeteilt sein, so dass der Erfassungsbereich frei von Substrat und Befestigungsmaterial ist. Dies bietet zudem den Vorteil, dass Beschädigungen des sensitiven Bereichs durch das Bonden einfacher vermeidbar sind. Um mechanische Spannungen aufgrund von Wärmeeinwirkung und damit einhergehender Längenausdehnung zu verringern oder zu verhindern, sind die Sensoren 6a-c aus Materialien gefertigt, welche den gleichen oder einen ähnlich niedrigen thermischen Ausdehnungskoeffizienten wie das Bauteil 5 aufweisen. Dabei sind Sensoren 6a-c und Bauteil 5 in einigen Ausführungsformen aus dem gleichen Material, wobei die Sensoren 6a-c optional statt mittels Bonden mittels Kleben oder Löten am Bauteil 5 befestigt sind. Alternativ sind Material und Form der Sensoren 6a-c derart gewählt, dass die Sensoren 6a-c auch unter solchen Spannungen formstabil sind, welche im Rahmen des möglichen Temperatureinsatzbereiches, z.B. von 283K bis 303K oder von 253K bis 343K, auftreten können.

In der Ausführungsform nach Fig. 8 weist die Sensoreinheit 4 drei Bauteile 5a-c aus einem form- und alterungsbeständigen Material auf, durch welche die Sensoren 6a,b, deren Erfassungsbezugspunkte R im Beispiel in der Sensormitte liegen, positionsfixiert sind. Dazu sind die Sensoren 6a,b jeweils mit einem Randbereich 24a-d mittels Bondstellen 8 an den Bauteilen 5a-c befestigt. Ausser zur Positionsfixierung dienen die Bauteile 5a-c auch zum Tragen und elektrischem Anschluss der Sensoren 6a,b. Hierzu sind die elektrischen Anschlüsse der Sensoren 6a,b, im Beispiel mittels Wire-Bonden 9, mit elektrischen Leiterbahnen 10 der Bauteile 5a-c verbunden. Um mechanische Spannungen aufgrund von Wärmeeinwirkung und damit einhergehender Längenausdehnung zu verringern oder zu verhindern, sind die Sensoren 6a,b aus Materialien gefertigt, welche den gleichen oder einen ähnlich niedrigen thermischen Ausdehnungskoeffizienten wie das Bauteil 5 aufweisen. Alternativ sind Material und Form der Sensoren 6a,b derart gewählt, dass die Sensoren 6a,b auch solchen Spannungen standhalten, die aufgrund von thermischen Formänderungen auftreten können. Als weitere Alternative sind die Sensoren 6a,b dergestalt ausgebildet, dass sie sich derart definiert verformen, dass ein Erfassen von Geberelementen 3c nicht beeinträchtigt wird, vorzugsweise so, dass ein Wölben unter Beibehaltung der Sensorsymmetrie erfolgt, mit den gestrichelten Linien 11 als Symmetrieachse. Dabei ist es vorteilhaft, das Bonden der Sensoren 6a,b bei einer Temperatur durchzuführen, die der Untergrenze des beabsichtigten Temperatureinsatzbereiches, z.B. 253 K, entspricht. Dadurch muss nur die Möglichkeit einer Ausdehnung, nicht aber einer Schrumpfung der Sensoren 6a,b berücksichtigt werden. Alternativ oder zusätzlich weist das System 100 Mittel zum Erwärmen und/oder Abkühlen der Sensoreinheit 4 auf, um die Temperatur der Sensoreinheit 4 gezielt zu beeinflussen und bspw. konstant bei Raumtemperatur (293K) zu halten.

In einer alternativen Ausführungsform dient die Länge des Bauteils 5b, ähnlich der Ausführungsform nach Fig. 4, zusätzlich zur Bestimmung des Sensorabstands d anhand eines Massstabs, indem die Enden des Bauteils 5b von den Sensoren 6a,b in Bezug zu den Erfassungsbezugspunkten R erfasst werden. Die Länge des Bauteils 5 dient dabei als Referenzlänge definierender Massstab und ist in der Steuer- und Auswerteeinheit 2 hinterlegt. In einer anderen alternativen Ausführungsform sind die beiden äusseren Bauteile 5a und 5c durch herkömmliche PCBs 20 ersetzt und die Sensoren 6a,b sind nur mit den gegenseitig zugewandten Randbereichen 24b und 24c am Bauteil 5b positionsfixiert. Der Sensorabstand d ist dadurch hochpräzise bestimmt, dass sich die Erfassungsbezugspunkte R in diesem Fall an den Randbereichen 24b bzw. 24c befinden (diese Anordnung ist in Fig. 8 nicht dargestellt), somit der Erfassungs- bzw. Sensorabstand durch die Befestigung der Randbereiche 24b,c am Bauteil 5 gleich bleibend ist. Anstelle dreier einzelner Bauteile 5a-c weist die Sensoreinheit 4 in einer weiteren alternativen Ausführungsformen ein einziges Bauteil 5 auf, welches sich von einer Gehäuseseite zur anderen erstreckt und an welchem die Sensoren 6a,b mit ihrer geberzugewandten Seite befestigt sind. Um dann ein Erfassen von Geberelementen 3c zu ermöglichen, werden die den analogen Fall behandelnden Lösungen aus Fig. 7 angewendet. In einer weiteren alternativen Ausführungsform wird ein vorgenanntes langgestrecktes Bauteil 5 verwendet, um die Sensoren 6a,b statt mit ihren geberzugewandten mit ihren geberabgewandten Seiten an diesem mittels Bondstellen 8 zu befestigen und dadurch in ihrer Position relativ zu einander zu fixieren. Dabei nimmt das Bauteil 5 wiederum die Funktion einer Leiterplatine ein, wozu die Sensoren 6a,b mit Leiterbahnen 10 auf dem Bauteil 5 beispielsweise mittels Wire-Bonden 9 oder BGAs 7 in elektrischem Kontakt stehen.

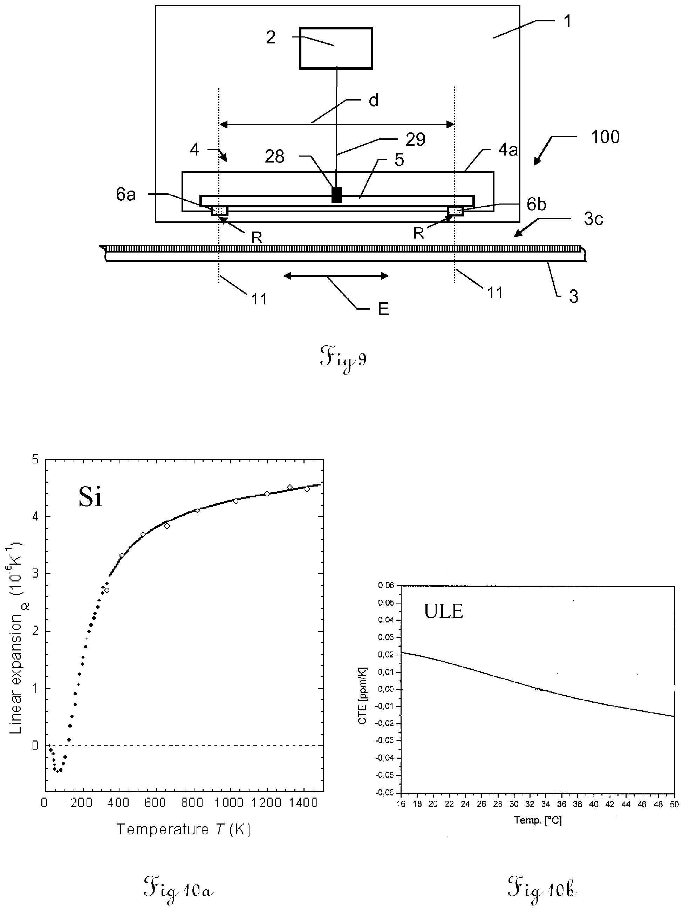

Die Fig. 9 zeigt eine schematische Darstellung eines erfindungsgemässen Systems 100 als Teil einer Messvorrichtung für Anwendungen, bei denen selbst kleinste Längenänderungen, wie sie bei einem Bauteil 5 mit einem thermischen Ausdehnungskoeffizienten von höchstens 5·10⁻⁶ *K*⁻¹ noch möglich sind, problematisch sind. Das System 100 weist hierzu neben dem Bauteil 5 aus einem form- und alterungsbeständigen Material, welches zur Bestimmung des Abstands der Sensoren 6a,b mittels Positionsfixierung der Sensoren 6a,b und/oder mittels Messung des Sensorabstands d dient, ein Thermometer 28 zum Messen der Temperatur des Bauteils 5 auf. Erfindungsgemäss wird in der vorliegenden Ausführungsform bei der Bestimmung des Sensorabstands d ein für die gemessene Temperatur hinterlegter Korrekturwert berücksichtigt, der die Längenänderung des Bauteils 5 bei dieser gemessenen Temperatur in Rechnung stellt. Auf diese Weise können noch präzisere Messergebnisse für den Sensorabstand d und somit für die Positionsbestimmung zwischen Sensoreinheit und Geber erhalten werden. Das Thermometer 28 ist mittels einer Kommunikationsverbindung 29 mit der Steuer- und Auswerteeinheit 2 verbunden, so dass durch die Steuer- und Auswerteeinheit 2 mittels des Thermometers 28 die Temperatur des Bauteils 5 bestimmbar ist, vorzugsweise mit einer Genauigkeit von ±0,1*K*. Weist das Bauteil 5 eine geringe thermische Leitfähigkeit auf, so dass nicht vernachlässigbare Temperaturgradienten am Bauteil 5 auftreten können, weist das System optional mehrere Thermometer 28 zur Temperaturbestimmung an mehreren Stellen des Bauteils 5 auf, wobei entweder ein Temperaturmittelwert oder Einzeltemperaturen für einzelne Bauteilabschnitte bestimmt werden. Die Bestimmung des Sensorabstands d erfolgt in der vorliegenden Ausführungsform anhand des Bauteils 5 wie weiter oben beschrieben und zusätzlich wird dabei die aktuelle Temperatur des Bauteils 5 bestimmt und berücksichtigt, wozu auf in der Steuer- und Auswerteeinheit 2 hinterlegte Informationen zurückgegriffen wird, welche das thermische Ausdehnungsverhalten des Bauteils 5 in Abhängigkeit von dessen Temperatur beschreiben. Derartige Informationen sind Wertetabellen oder Parameter von Rechenvorschriften, die
▪ die Temperaturabhängigkeit der Länge des Bauteils 5, des Sensorabstands d oder des thermischen Ausdehnungskoeffizienten des Bauteilmaterials, oder
▪ die Temperaturabhängigkeit der relativen oder absoluten Änderung der Länge des Bauteils 5, des Sensorabstands d oder des thermischen Ausdehnungskoeffizienten des Bauteilmaterials, optional in Bezug auf eine Referenztemperatur,
beschreiben. Je nach Ausführungsform wird aus der gemessenen Temperatur bzw. aus dem Temperaturmittelwert oder aus den Einzeltemperaturen und den hinterlegten Informationen direkt ein Korrekturwert für den Sensorabstand d ermittelt indem auf einen hinterlegten und der gemessenen Temperatur zugeordneten Wert zurückgegriffen wird. Alternativ wird ein solcher Korrekturwert in einem weiteren Schritt anhand einer in der Steuer- und Auswerteeinheit 2 hinterlegten Rechenvorschrift für die gemessene Temperatur berechnet. Bei einem System 100, bei dem das Bauteil 5 zur Positionsfixierung dient, wird der in der Steuer- und Auswerteeinheit 2 hinterlegte Wert des Sensorabstands d anhand des Korrekturwerts angepasst. Weist das Bauteil 5 einen Massstab 15 auf, werden entweder die dem Massstab 15 zugeordneten Referenzlängen bzw. bei Vorliegen eines Positionscodes 15 die den Codeelementen 15c zugeordneten Positionswerte anhand des Korrekturwerts korrigiert oder ein anhand einer unkorrigierten Referenzlänge bestimmter Sensorabstand d wird anschliessend anhand des Korrekturwerts angepasst.

Alternativ oder zusätzlich weist das System 100 wenigstens ein Thermometer 28 zur Bestimmung der Temperaturen der Sensoren 6a,b auf und die Temperaturen der Sensoren 6a,b werden bei der Bestimmung des Sensorabstands d analog zur oben beschrieben Berücksichtigung der Temperatur des Bauteils 5 herangezogen wird.

Weiter weist alternativ oder zusätzlich das System 100 eine Heiz- bzw. Kühleinheit auf, mit welcher die Temperatur des Bauteils 5 und/oder der Sensoren 6a,b einstellbar ist. Ein solches gezieltes Einstellen bzw. Konstanthalten der Temperatur verhindert bzw. kompensiert durch unerwünschte Wärmeeinwirkung bedingte Änderungen des Sensorabstands d.

Mittels der oben dargestellten Verwendung eines Thermometers 28 bzw. einer Heiz- bzw. Kühleinheit lässt sich beispielsweise einfaches Silizium als Material für das Bauteil 5 verwenden, welches bei Raumtemperatur einen am oberen Ende des spezifizierten Bereichs liegenden thermischen Ausdehnungskoeffizienten von etwa 3·10⁻⁶ aufweist, welches zudem in einem weiten Temperaturbereich eine erkennbare Temperaturabhängigkeit aufweist, wie dies in Fig. 10a dargestellt ist. Dem gegenübergestellt ist in Fig. 10b der Verlauf des thermischen Ausdehnungskoeffizienten (CTE) in Abhängigkeit der Temperatur (Temp.) eines Ultra-Low-Thermal-Expansion-(ULE)-Materials gezeigt. Ein solches ULE-Material zeigt nur geringe Schwankungen des thermischen Ausdehnungskoeffizienten, was für die Verwendung als Material für das Bauteil 5 besonders bei Ausführungsformen ohne Temperaturbestimmung Vorteile bietet. Vorteilhaft an der Verwendung von Silizium als Material für das als Substrat dienende Bauteil 5 ist, dass sich damit auf einfache Weise eine wie zu Fig. 7 beschriebene Ausführungsform realisieren lässt, bei der Bauteil 5 und Sensoren 6a-c zur Vermeidung thermisch bedingter Spannungen gleichen thermischen Ausdehnungskoeffizienten aus gleichem Material gefertigt sind, da kostengünstige, für das System geeignete Sensoren aus Silizium gefertigt sind.

Alternativ zu allen beschriebenen Ausführungsformen ist es denkbar, dass Messwerte zur Bestimmung des Sensorabstands d von einer Kommunikationseinheit der Messvorrichtung an einen externen Rechner übermittelt werden, welcher anstelle der Steuer- und Auswerteeinheit 2 anhand der Messwerte die Berechnung des Sensorabstands d vornimmt und optional an die Messvorrichtung zurück überträgt.

## Patentansprüche

1. System (100) zur Bestimmung von Relativpositionen umfassend einen Geber (3) mit Geberelementen (3c) und eine elektronische Sensoreinheit (4), wobei
▪ Sensoreinheit (4) und Geber (3) in einer Erstreckungsrichtung (E) relativ zueinander beweglich sind und
▪ die Sensoreinheit (4) einen ersten Sensor (6a) und wenigstens einen weiteren, zweiten Sensor (6b) aufweist, wobei der erste Sensor (6a) und der zweite Sensor (6b) zueinander einen derart bemessenen Sensorabstand (d) in der Erstreckungsrichtung (E) aufweisen, dass in einem Schritt wenigstens ein Geberelement (3c) durch den ersten Sensor (6a) und wenigstens ein Geberelement (3c) durch den zweiten Sensor (6b) erfassbar sind,
**dadurch gekennzeichnet, dass**
das System (100) ein Bauteil (5) aufweist, anhand dessen der Sensorabstand (d) hochpräzise, d.h. mit einem relativen Fehler von höchstens 5·10⁻⁶, bestimmbar ist, wobei das Bauteil (5) aus einem form- und alterungsbeständigen Material mit einem thermischen Ausdehnungskoeffizienten mit einem Betrag in einem Bereich von 0 bis höchstens 5·10⁻⁶ *K*⁻¹ gefertigt ist.

2. System (100) nach Anspruch 1,
**dadurch gekennzeichnet, dass**
das Bauteil (5) einen Massstab (15) aufweist, der sich in Erstreckungsrichtung (E) erstreckt und eine hochpräzise Referenzlänge definiert, wobei die Referenzlänge einen relativen Fehler im Bereich von höchstens 5·10⁻⁶, insbesondere von höchstens 1·10⁻⁶, im Speziellen von höchstens 5·10⁻⁷, aufweist.

3. System (100) nach Anspruch 2,
**dadurch gekennzeichnet, dass**
die Länge des Massstabs (15) in Erstreckungsrichtung (E) gleich der Referenzlänge ist, wobei der Massstab (15) derart angeordnet ist, dass zur hochpräzisen Bestimmung des Sensorabstands (d) ein Massstabsende (13) vom ersten Sensor (6a) erfassbar ist und das zweite Massstabsende (13) vom zweiten Sensor (6b) erfassbar ist.

4. System (100) nach einem der vorhergehenden Ansprüche,
**dadurch gekennzeichnet, dass**
der Massstab (15) in Erstreckungsrichtung (E) einen Positionscode mit Codeelementen (15c) aufweist und der Abstand von Codeelementen (15c) zueinander als Referenzlänge dient, wobei der Positionscode derart gestaltet ist, dass zur hochpräzisen Bestimmung des Sensorabstands vom ersten Sensor (6a) und vom zweiten Sensor (6b) jeweils wenigstens ein Codeelement (15c) erfassbar ist.

5. System (100) nach einem der vorhergehenden Ansprüche,
**dadurch gekennzeichnet, dass**
das Bauteil (5) zur hochpräzisen Bestimmung des Sensorabstands (d) als ein Substrat dient, durch welches der erste Sensor (6a) und der zweite Sensor (6b) beabstandet voneinander in ihrer Position zueinander fixiert sind, wobei die Masse des Bauteils (5) bzw. der Sensorabstand (d) herstellerseitig vor einem Einbau der Sensoreinheit (4) hochpräzise mit einem relativen Fehler im Bereich von höchstens 5·10⁻⁶, insbesondere von höchstens 1·10⁻⁶, im Speziellen von höchstens 5·10⁻⁷, bestimmt ist.

6. System (100) nach einem der vorhergehenden Ansprüche,
**dadurch gekennzeichnet, dass**
das Bauteil (5) an der Sensoreinheit (4) und, zumindest zum Teil, zwischen den Sensoren (6a-c) und dem Geber (3) angeordnet ist.

7. System (100) nach einem der vorhergehenden Ansprüche,
**dadurch gekennzeichnet, dass**
der erste Sensor (6a) und der zweite Sensor (6b) seitlich am Bauteil (5) anliegen und die Sensoreinheit (4) eine Feder- und/oder Spannvorrichtung (21) aufweist, durch welche der erste Sensor (6a) und der zweite Sensor (6b) mittels Federkraft in Richtung Bauteil (5) beaufschlagt und gegen das Bauteil gepresst gehalten sind und/oder die Sensoren (6a,b) mit jener Seite, mit welcher sie seitlich am Bauteil (5) anliegen, am Bauteil (5) befestigt sind.

8. System (100) nach einem der vorhergehenden Ansprüche,
**dadurch gekennzeichnet, dass**
der erste Sensor (6a) und der zweite Sensor (6b) jeweils in eine erste Zone (z1) und eine zweite Zone (z2) aufgeteilt sind, wobei die erste Zone (z1) jeweils zur Erfassung von Geberelementen (3c) ausgebildet ist und die zweite Zone (z2) am Bauteil (5) befestigt ist.

9. System (100) nach einem Ansprüche 1 bis 4,
**dadurch gekennzeichnet, dass**
das Bauteil (5) am Geber (3), insbesondere an einem Ende des Gebers (3), angeordnet ist.

10. System (100) nach einem der vorhergehenden Ansprüche,
**dadurch gekennzeichnet, dass**
das System (100) ein Thermometer (28) zur Bestimmung der Temperatur des Bauteils (5) und/oder der Sensoren (6a,b) aufweist und Information über das thermische Ausdehnungsverhalten des Bauteils (5) bzw. der Sensoren (6a,b) in Abhängigkeit von der Temperatur abgelegt sind und die Steuer- und Auswerteeinheit (2) derart programmiert ist, dass die Bestimmung des Sensorabstands (d) auch anhand der mittels Thermometer bestimmbaren Temperatur des Bauteils (5) und/oder der Sensoren (6a,b) und anhand der in der Steuer- und Auswerteeinheit (2) hinterlegten Information erfolgt.

11. System (100) nach einem der vorhergehenden Ansprüche,
**dadurch gekennzeichnet, dass**
der Sensorabstand (d) im Bereich von 1 mm bis 100 mm, insbesondere im Bereich von 5 mm bis 50 mm, im Speziellen im Bereich von 10 mm bis 30 mm, und insbesondere bei 20mm ± 2mm, liegt.

12. System (100) nach einem der vorhergehenden Ansprüche,
**dadurch gekennzeichnet, dass**
das System (100) zur opto-elektronischen, induktivelektronischen oder kapazitiv-elektronischen Bestimmung von Relativpositionen ausgebildet ist.

13. System (100) nach einem der vorhergehenden Ansprüche,
**dadurch gekennzeichnet, dass**
der thermische Ausdehnungskoeffizienten des form- und alterungsbeständigen Materials den Betrag von 5·10⁻⁶ *K*⁻¹, zumindest innerhalb eines Temperaturbereichs von 253K bis 343K, im Besonderen zumindest innerhalb eines Temperaturbereichs von 288K bis 303K, im Speziellen zumindest innerhalb eines Temperaturbereichs von 291K bis 295K, nicht überschreitet.

14. System (100) nach einem der vorhergehenden Ansprüche,
**dadurch gekennzeichnet, dass**
der Sensorabstand (d) unabhängig vom Abstand von Geberelementen (3c) oder Gruppen von Geberelementen (3c) festgelegt ist.

15. System (100) nach einem der vorhergehenden Ansprüche,
**dadurch gekennzeichnet, dass**
das System (100) ausgebildet ist als Linearencoder, insbesondere wobei das System (100) Bestandteil eines 3D-Koordinatenmesssystems ist.

16. Verfahren zum hochpräzisen, d.h. mit einem relativen Fehler von höchstens 5·10⁻⁶, Bestimmen eines Sensorabstands in einem Systems (100) nach Anspruch 1,
**dadurch gekennzeichnet, dass**
das Bauteil (5) aus einem form- und alterungsbeständigen Material mit einem thermischen Ausdehnungskoeffizienten mit einem Betrag im Bereich von 0 bis höchstens 5·10⁻⁶ *K*^{*-*1} geformt ist und wenigstens ein Teil des Bauteils (5) hochpräzise ausgemessen wird und der bzw. die gemessenen Werte in der Steuer- und Auswerteeinheit (2) des Systems (100) hinterlegt und
▪ das Bauteil (5) als ein Substrat dient, durch welches der erste Sensor (6a) und der zweite Sensor (6b) in ihrer Position zueinander fixiert sind, und die Sensoren (6a, 6b) an zwei Seiten des Bauteils (5) fixiert sind deren Abstand zueinander aus der Ausmessung des Bauteils (5) bekannt ist, und/oder
▪ der Abstand zwischen den am Bauteil (5) fixierten Sensoren (6a, 6b) hochpräzise ausgemessen und in der Steuer-und Auswerteeinheit hinterlegt wird, und/oder
▪ das Bauteil (5) einen eine Referenzlänge definierenden Massstab (15) aufweist, wobei die Referenzlänge hochpräzise ausgemessen wird und wobei
o die Länge des Massstabs (15) die Referenzlänge ist und zum Bestimmen des Sensorabstands (d) ein Massstabsende (13) vom ersten Sensor (6a) und das zweite Massstabsende (13) vom zweiten Sensor (6b) erfasst werden, und/oder
o der Massstab (15) einen Positionscode mit Codeelementen (15c) aufweist, wobei der Abstand von Codeelementen (15c) zueinander als Referenzlänge dient und zum Bestimmen des Sensorabstands (d) wenigstens ein Codeelement (15c) vom ersten Sensor (6a) und wenigstens ein Codeelement (15c) vom zweiten Sensor (6b) erfasst werden.

17. Verfahren nach Anspruch 16,
**dadurch gekennzeichnet, dass**
die Temperatur des Bauteils (5) und/oder der Sensoren (6a,b) gemessen wird und die gemessene Temperatur anhand von in der Steuer- und Auswerteeinheit (2) hinterlegter Information bei der Bestimmung des Sensorabstands (d) berücksichtigt wird.

18. Computerprogrammprodukt, das auf einem maschinenlesbaren Träger gespeichert ist, oder Computer-Datensignal, verkörpert durch eine elektromagnetische Welle, mit Programmcode, zur Steuerung bzw. Durchführung des Verfahrens nach Anspruch 17.

## Claims

1. System (100) for determining relative positions comprising an encoder (3) having encoder elements (3c) and an electronic sensor unit (4), wherein
▪ sensor unit (4) and encoder (3) are movable relative to one another in a direction (E) of extent, and
▪ the sensor unit (4) has a first sensor (6a) and at least one further, second sensor (6b), wherein the first sensor (6a) and the second sensor (6b) have with respect to one another a sensor distance (d) in the direction (E) of extent, said sensor distance being dimensioned in such a way that in one step at least one encoder element (3c) is detectable by the first sensor (6a) and at least one encoder element (3c) is detectable by the second sensor (6b),
**characterized in that**
the system (100) has a component (5) with the aid of which the sensor distance (d) is determinable highly precisely, i.e. with a relative error of at most 5·10⁻⁶, wherein the component (5) is produced from a dimensionally stable and aging-resistant material having a coefficient of thermal expansion having an absolute value in a range of 0 to at most 5·10⁻⁶ *K*⁻¹.

2. System (100) according to Claim 1,
**characterized in that**
the component (5) has a scale (15), which extends in the direction (E) of extent and defines a highly precise reference length, wherein the reference length has a relative error in the region of at most 5·10⁻⁶, in particular of at most 1·10⁻⁶, especially of at most 5·10⁻⁷.

3. System (100) according to Claim 2,
**characterized in that**
the length of the scale (15) in the direction (E) of extent is equal to the reference length, wherein the scale (15) is arranged in such a way that, for the highly precise determination of the sensor distance (d), one scale end (13) is detectable by the first sensor (6a) and the second scale end (13) is detectable by the second sensor (6b).

4. System (100) according to any one of the preceding claims,
**characterized in that**
the scale (15) has a position code having code elements (15c) in the direction (E) of extent and the distance between code elements (15c) serves as the reference length, wherein the position code is configured in such a way that, for the highly precise determination of the sensor distance, in each case at least one code element (15c) is detectable by the first sensor (6a) and by the second sensor (6b).

5. System (100) according to any one of the preceding claims,
**characterized in that**
the component (5) for the highly precise determination of the sensor distance (d) serves as a substrate which fixes the first sensor (6a) and the second sensor (6b) in terms of their position with respect to one another in a manner spaced apart from one another, the dimensions of the component (5) or the sensor distance (d) being determined highly precisely with a relative error in the region of at most 5·10⁻⁶, in particular of at most 1·10⁻⁶, especially of at most 5·10⁻⁷, by the manufacturer before incorporation of the sensor unit (4).

6. System (100) according to any one of the preceding claims,
**characterized in that**
the component (5) is arranged on the sensor unit (4) and, at least partly, between the sensors (6a-c) and the encoder (3).

7. System (100) according to any one of the preceding claims,
**characterized in that**
the first sensor (6a) and the second sensor (6b) bear laterally on the component (5) and the sensor unit (4) has a spring and/or clamping device (21), by which the first sensor (6a) and the second sensor (6b) have spring force applied to them in the direction of the component (5) and they are kept pressed against the component and/or the sensors (6a,b) are fixed to the component (5) by that side by which they bear laterally on the component (5).

8. System (100) according to any one of the preceding claims,
**characterized in that**
the first sensor (6a) and the second sensor (6b) are divided in each case into a first zone (z1) and a second zone (z2), wherein the first zone (z1) is configured in each case for detecting encoder elements (3c) and the second zone (z2) is fixed to the component (5).

9. System (100) according to any one of Claims 1 to 4,
**characterized in that**
the component (5) is arranged on the encoder (3), in particular at one end of the encoder (3).

10. System (100) according to any one of the preceding claims,
**characterized in that**
the system (100) has a thermometer (28) for determining the temperature of the component (5) and/or of the sensors (6a,b) and information about the thermal expansion behavior of the component (5) and/or of the sensors (6a,b) depending on the temperature is stored and the control and evaluation unit (2) is programmed in such a way that the sensor distance (d) is also determined with the aid of the thermometer-determinable temperature of the component (5) and/or the sensors (6a,b) and with the aid of the information stored in the control and evaluation unit (2).

11. System (100) according to any one of the preceding claims,
**characterized in that**
the sensor distance (d) is in the range of 1 mm to 100 mm, in particular in the range of 5 mm to 50 mm, especially in the range of 10 mm to 30 mm, and in particular 20 mm ± 2 mm.

12. System (100) according to any one of the preceding claims,
**characterized in that**
the system (100) is configured for the optoelectronic, inductive-electronic or capacitive-electronic determination of relative positions.

13. System (100) according to any one of the preceding claims,
**characterized in that**
the coefficient of thermal expansion of the dimensionally stable and aging-resistant material does not exceed the absolute value of 5·10⁻⁶ *K*⁻¹, at least within a temperature range of 253K to 343K, in particular at least within a temperature range of 288K to 303K, especially at least within a temperature range of 291K to 295K.

14. System (100) according to any one of the preceding claims,
**characterized in that**
the sensor distance (d) is defined independently of the distance between encoder elements (3c) or groups of encoder elements (3c).

15. System (100) according to any one of the preceding claims,
**characterized in that**
the system (100) is configured as a linear encoder system, in particular wherein the system (100) is part of a 3D coordinate measuring system.

16. Method for highly precisely, i.e. with a relative error of at most 5·10⁻⁶, determining a sensor distance in a system (100) according to Claim 1,
**characterized in that**
the component (5) is shaped from a dimensionally stable and aging-resistant material having a coefficient of thermal expansion having an absolute value in the range of 0 to at most 5·10⁻⁶ *K*⁻¹ and at least one part of the component (5) is measured highly precisely and the measured value or values is or are stored in the control and evaluation unit (2) of the system (100), and
▪ the component (5) serves as a substrate which fixes the first sensor (6a) and the second sensor (6b) in terms of their position with respect to one another, and the sensors (6a, 6b) are fixed on two sides of the component (5), the distance between which is known from the measurement of the component (5), and/or
▪ the distance between the sensors (6a, 6b) fixed to the component (5) is measured highly precisely and is stored in the control and evaluation unit, and/or
▪ the component (5) has a scale (15) defining a reference length, wherein the reference length is measured highly precisely, and wherein
o the length of the scale (15) is the reference length and, for determining the sensor distance (d), one scale end (13) is detected by the first sensor (6a) and the second scale end (13) is detected by the second sensor (6b), and/or
o the scale (15) has a position code having code elements (15c), wherein the distance between code elements (15c) serves as the reference length and, for determining the sensor distance (d), at least one code element (15c) is detected by the first sensor (6a) and at least one code element (15c) is detected by the second sensor (6b).

17. Method according to Claim 16,
**characterized in that**
the temperature of the component (5) and/or of the sensors (6a,b) is measured and the measured temperature is taken into account when determining the sensor distance (d) with the aid of information stored in the control and evaluation unit (2).

18. Computer program product, stored on a machine-readable carrier, or computer data signal, embodied by an electromagnetic wave, comprising program code, for controlling or carrying out the method according to Claim 17.

## Revendications

1. Système (100) destiné à la définition de positions relatives, comprenant un transmetteur (3) avec des éléments de transmetteur (3c) et une unité de capteurs (4) électronique,
▪ unité de capteurs (4) et transmetteur (3) étant mobiles l'une par rapport à l'autre dans une direction d'extension (E), et
▪ l'unité de capteurs (4) présentant un premier capteur (6a) et au moins un autre deuxième capteur (6b), le premier capteur (6a) et le deuxième capteur (6b) présentant entre eux un intervalle de capteurs (d) dans la direction d'extension (E) dimensionné de telle sorte que, dans une étape, au moins un élément de transmetteur (3c) peut être détecté par le premier capteur (6a) et au moins un élément de transmetteur (3c) peut être détecté par le deuxième capteur (6b),
**caractérisé en ce que**
le système (100) présente un composant (5) à l'aide duquel l'intervalle de capteurs (d) peut être défini de façon très précise, c'est-à-dire avec une erreur relative de 5·10⁻⁶ au maximum, le composant (5) étant fabriqué en matériau dimensionnellement stable et résistant au vieillissement ayant un coefficient de dilatation thermique dont le montant se situe dans une plage de 0 à 5·10⁻⁶K⁻¹ au maximum.

2. Système (100) selon la revendication 1,
**caractérisé en ce que**
le composant (5) présente une échelle (15) qui s'étend dans la direction d'extension (E) et définit une longueur de référence très précise, la longueur de référence présentant une erreur relative dans la plage de 5·10⁻⁶ au maximum, en particulier de 1·10⁻⁶ au maximum, spécialement de 5·10⁻⁷ au maximum.

3. Système (100) selon la revendication 2,
**caractérisé en ce que**
la longueur de l'échelle (15) dans la direction d'extension (E) est égale à la longueur de référence, l'échelle (15) étant disposée de telle sorte que, pour la définition très précise de l'intervalle de capteurs (d), une extrémité de l'échelle (13) peut être détectée par le premier capteur (6a), et l'autre extrémité de l'échelle (13) peut être détectée par le deuxième capteur (6b).

4. Système (100) selon l'une des revendications précédentes,
**caractérisé en ce que**
l'échelle (15) présente dans la direction d'extension (E) un code de position avec des éléments de code (15c), et l'intervalle entre éléments de code (15c) sert de longueur de référence, le code de position étant formé de telle sorte que, pour la définition très précise de l'intervalle de capteurs, respectivement au moins un élément de code (15c) peut être détecté par le premier capteur (6a) et par le deuxième capteur (6b).

5. Système (100) selon l'une des revendications précédentes,
**caractérisé en ce que**,
pour la définition très précise de l'intervalle de capteurs (d), le composant (5) sert de substrat par lequel le premier capteur (6a) et le deuxième capteur (6b) sont fixés dans leur position l'un par rapport à l'autre de façon espacée entre eux, la masse du composant (5) ou respectivement l'intervalle de capteurs (d) étant défini(e), côté fabricant, avant un montage de l'unité de capteurs (4) de façon très précise avec une erreur relative dans la plage de 5·10⁻⁶ au maximum, en particulier de 1·10⁻⁶ au maximum, spécialement de 5·10⁻⁷ au maximum.

6. Système (100) selon l'une des revendications précédentes,
**caractérisé en ce que**
le composant (5) est disposé sur l'unité de capteur (4) et, au moins en partie, entre les capteurs (6a-c) et le transmetteur (3).

7. Système (100) selon l'une des revendications précédentes,
**caractérisé en ce que**
le premier capteur (6a) et le deuxième capteur (6b) sont latéralement adjacents au composant (5), et l'unité de capteur (4) présente un dispositif de ressort et/ou de serrage (21) par lequel le premier capteur (6a) et le deuxième capteur (6b) sont, au moyen d'une force de ressort, poussés en direction du composant (5) et maintenus pressés contre le composant, et/ou les capteurs (6a, b) sont fixés sur le composant (5) avec le côté par lequel ils sont latéralement adjacents au composant (5).

8. Système (100) selon l'une des revendications précédentes,
**caractérisé en ce que**
le premier capteur (6a) et le deuxième capteur (6b) sont respectivement répartis en une première zone (z1) et une deuxième zone (z2), la première zone (z1) étant constituée respectivement pour la détection d'éléments de transmetteur (3c), et la deuxième zone (z2) étant fixée sur le composant (5).

9. Système (100) selon une revendication 1 à 4,
**caractérisé en ce que**
le composant (5) est disposé sur le transmetteur (3), en particulier à une extrémité du transmetteur (3).

10. Système (100) selon l'une des revendications précédentes,
**caractérisé en ce que**
le système (100) présente un thermomètre (28) destiné à la définition de la température du composant (5) et/ou des capteurs (6a, b), et des informations sur le comportement en dilatation thermique du composant (5) ou respectivement des capteurs (6a, b) sont enregistrées en fonction de la température, et l'unité de commande et d'analyse (2) est programmée de telle sorte que la définition de l'intervalle de capteurs (d) s'effectue également à l'aide de la température du composant (5) et/ou des capteurs (6a, b) pouvant être définie par le thermomètre et à l'aide de l'information enregistrée dans l'unité de commande et d'analyse (2).

11. Système (100) selon l'une des revendications précédentes,
**caractérisé en ce que**
l'intervalle de capteurs (d) se situe dans la plage de 1 mm à 100 mm, en particulier dans la plage de 5 mm à 50 mm, spécialement dans la plage de 10 mm à 30 mm, et en particulier est égale à 20 mm ± 2 mm.

12. Système (100) selon l'une des revendications précédentes,
**caractérisé en ce que**
le système (100) est constitué pour la définition de positions relatives à voie optoélectronique, inductive électronique ou capacitive électronique.

13. Système (100) selon l'une des revendications précédentes,
**caractérisé en ce que**
le coefficient de dilatation thermique du matériau dimensionnellement stable et résistant au vieillissement ne dépasse pas le montant de 5·10⁻⁶ *K*^{*-*1}, au moins à l'intérieur d'une plage de température de 253 K à 343 K, en particulier au moins à l'intérieur d'une plage de température de 288 K à 303 K, spécialement au moins à l'intérieur d'une plage de température de 291 K à 295 K.

14. Système (100) selon l'une des revendications précédentes,
**caractérisé en ce que**
l'intervalle de capteurs (d) est stipulé indépendamment de l'intervalle d'éléments de transmetteur (3c) ou de groupes d'éléments de transmetteur (3c).

15. Système (100) selon l'une des revendications précédentes,
**caractérisé en ce que**
le système (100) est constitué en tant que codeur linéaire, le système (100) faisant en particulier partie d'un système de coordonnées 3D.

16. Procédé destiné à la définition très précise, c'est-à-dire avec une erreur relative de 5·10⁻⁶ au maximum, d'un intervalle de capteurs dans un système (100) selon la revendication 1,
**caractérisé en ce que**
le composant (5) est formé d'un matériau dimensionnellement stable et résistant au vieillissement ayant un coefficient de dilatation thermique dont le montant se situe dans la plage de 0 à 5·10⁻⁶*K*^{*-*1} au maximum, et au moins une partie du composant (5) est mesurée de façon très précise, et la ou respectivement les valeurs mesurées sont enregistrées dans l'unité de commande et d'analyse (2) du système (100), et/ou
▪ le composant (5) sert de substrat, par lequel le premier capteur (6a) et le deuxième capteur (6b) sont fixés dans leur position l'un par rapport à l'autre, et les capteurs (6a, 6b) sont fixés sur deux côtés du composant (5) dont l'intervalle l'un par rapport à l'autre est connu à partir de la mesure du composant (5), et/ou
▪ l'intervalle entre les capteurs (6a, 6b) fixés sur le composant (5) est mesuré de façon très précise et enregistré dans l'unité de commande et d'analyse (2), et/ou
▪ le composant (5) présente une échelle (15) définissant une longueur de référence, la longueur de référence étant mesurée de façon très précise, et
∘ la longueur de l'échelle (15) étant la longueur de référence, et une extrémité de l'échelle (13) étant détectée par le premier capteur (6a), et la deuxième extrémité de l'échelle (13) étant détectée par le deuxième capteur (6b) pour la définition de l'intervalle de capteurs (d), et/ou
∘ l'échelle (15) présentant un code de position avec des éléments de code (15c), l'intervalle d'éléments de code (15c) entre eux servant de longueur de référence, et au moins un élément de code (15c) étant détecté par le premier capteur (6a) et au moins un élément de code (15c) étant détecté par le deuxième capteur (6b) pour la définition de l'intervalle de capteurs (d).

17. Procédé selon la revendication 16,
**caractérisé en ce que**
la température du composant (5) et/ou des capteurs (6a, b) est mesurée, et la température mesurée est prise en compte à l'aide de l'information enregistrée dans l'unité de commande et d'analyse (2) lors de la définition de l'intervalle de capteurs (d).

18. Produit logiciel qui est enregistré sur un support lisible par une machine, ou signal de données d'ordinateur, concrétisé par une onde électromagnétique, avec code programme, pour la commande ou respectivement la réalisation du procédé selon la revendication 17.
